(19) Europäisches Patentamt
European Patent Office
Office européen des brevets

(11) **EP 2 509 929 B1**

(12) **FASCICULE DE BREVET EUROPEEN**

(45) Date de publication et mention
de la délivrance du brevet:
**01.08.2018 Bulletin 2018/31**

(21) Numéro de dépôt: **10807745.4**

(22) Date de dépôt: **09.12.2010**

(51) Int Cl.:
***C04B 35/58*** *(2006.01)*  ***C04B 35/597*** *(2006.01)*
***C04B 35/65*** *(2006.01)*  ***C04B 35/599*** *(2006.01)*

(86) Numéro de dépôt international:
**PCT/IB2010/055681**

(87) Numéro de publication internationale:
**WO 2011/070524 (16.06.2011 Gazette 2011/24)**

(54) **PRODUIT REFRACTAIRE A MATRICE DE SIAION DOPE BORE**

BORDOTIERTES FEUERFESTES MATERIAL MIT SIAIONMATRIX

BORON-DOPED REFRACTORY MATERIAL HAVING A SIAION MATRIX

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.12.2009 FR 0905968**

(43) Date de publication de la demande:
**17.10.2012 Bulletin 2012/42**

(73) Titulaire: **Saint-Gobain Centre De Recherches
Et D'etudes Europeen
92400 Courbevoie (FR)**

(72) Inventeurs:
• **BOUMAHDI, Najih
F-84330 Caromb (FR)**
• **ROULET, Frédéric
F-13300 Salon De Provence (FR)**
• **JORGE, Eric
F-84210 Les Valayans (FR)**

(74) Mandataire: **Nony
11 rue Saint-Georges
75009 Paris (FR)**

(56) Documents cités:
**WO-A1-2010/049878    WO-A2-2009/083678
JP-A- 7 196 375**

**Description**

L'invention se rapporte à un produit fritté réfractaire, notamment sous la forme d'un bloc. L'invention se rapporte également à l'utilisation de ces produit et bloc pour fabriquer des revêtements de fours métallurgiques, et en particulier des revêtements de creusets ou de tuyères de hauts-fourneaux, voire d'autres revêtements réfractaires de four, des revêtements réfractaires d'échangeurs thermiques ou encore des supports de cuisson, plus particulièrement des supports de cuisson de produits céramiques.

Notamment pour constituer le revêtement des creusets de hauts-fourneaux, il est connu d'utiliser des blocs carbonés. Ces blocs sont classiquement obtenus par mise en forme d'une pâte liée avec de la résine ou du brai, puis cuisson à une température supérieure à 1200 °C. Le produit est ainsi calciné et les liants organiques pyrolysés. Les blocs carbonés présentent cependant une faible résistance à l'oxydation et à la corrosion par la fonte.

Par ailleurs, on connaît des produits réfractaires composites comportant un granulat réfractaire lié par une matrice liante de type SiAlON. De tels produits sont notamment connus de WO2009083078, US 4,533,646, US 3,991,166, US 4,243,621, ou EP 0 153 000. Ces produits sont résistants à l'oxydation par la vapeur d'eau et à l'attaque par les alcalins mais résistent mal à la corrosion.

On connaît aussi des produits à matrice liante de type $Si_3N_4$ avec ajout à base de bore, par exemple de FR 0 412 627 déposé par la Demanderesse. Ces produits ne présentent cependant pas une bonne résistance à la corrosion par attaque par les alcalins.

EP 0 482 984 divulgue un produit réfractaire comprenant un granulat réfractaire lié par une matrice constituée majoritairement de SiAlON de formule $Si_{6-z}Al_zO_zN_{8-z}$, avec $0,5 < z < 4,0$. Des particules de nitrure de bore (BN) hexagonal et/ou des paillettes de graphite sont dispersées dans la matrice. Un tel produit présente une faible résistance à l'oxydation à la vapeur d'eau.

FR2892720 divulgue un produit réfractaire comportant un granulat lié par une matrice azotée, dont la couche superficielle comporte un agent anti-poussières choisi parmi le calcium et le bore.

On connaît aussi de WO96/15999 un produit réfractaire comprenant un granulat réfractaire lié par une matrice constituée majoritairement de SiAlON, d'AlN (ou un de ses polytypes) et des particules de nitrure de titane, et facultativement de nitrure de bore hexagonal, de carbone amorphe et/ou des paillettes de graphite. Un tel produit présente également une faible résistance à l'oxydation par la vapeur d'eau.

Il existe donc un besoin pour un produit réfractaire présentant une bonne résistance à la corrosion à la fonte, au laitier et aux alcalins, et à l'oxydation à la vapeur d'eau.

Un but de l'invention est de satisfaire ce besoin.

L'invention propose un produit réfractaire fritté selon la revendication 1.

Comme cela apparaîtra plus clairement dans la suite de la description, les inventeurs ont découvert que la présence de bore sous une autre forme que sous la forme d'une phase hexagonale de BN permet, de manière surprenante, d'obtenir un excellent compromis entre la résistance à l'oxydation par la vapeur d'eau et la résistance à la corrosion par la fonte, par le laitier et par les alcalins.

Les indices x, y, u et v sont stoechiométriques et normalisés par rapport à celui qui est le plus élevé, rendu égal à 1.

Cette définition de la phase cristallisée de formule $Si_xAl_yO_uN_v$ exclut en particulier $Si_3N_4$ et $Si_2ON_2$. Du $Si_3N_4$ et du $Si_2ON_2$ peuvent cependant être présents dans le produit, notamment dans le granulat.

Dans différents modes de réalisation, un produit fritté selon l'invention peut encore présenter une ou plusieurs des caractéristiques optionnelles suivantes :

- La matrice représente au moins 5 %, au moins 10%, au moins 13%, voire au moins 15 % de la masse du produit et/ou moins de 60%, moins de 40%, moins de 30 %, voire moins de 25 % de la masse du produit. Par définition, le complément est constitué par le granulat ;
- La teneur en ladite phase cristallisée de formule $Si_xAl_yO_uN_v$ dans le produit est supérieure à 7%, supérieure à 10%, et/ou inférieure à 50%, de préférence inférieure à 40%, de préférence inférieure à 30%, de préférence inférieure à 25%, de préférence inférieure à 20%, en pourcentages en masse sur la base dudit produit ;
- La teneur en bore autre que sous la forme d'une phase hexagonale de BN dans le produit est supérieure à 0,1%, supérieure à 0,2%, supérieure à 0,4%, supérieure à 0,5%, et inférieure à 2,7%, inférieure à 2,5%, inférieure à 2,0%, inférieure à 1,5%, en pourcentages en masse sur la base dudit produit ;
- La teneur en phases cristallisées BN, et de préférence la teneur en phase hexagonale de BN, dans le produit, est inférieure à 10%, inférieure à 5%, inférieure à 3%, inférieure à 2% de la masse du produit. De préférence cette teneur est sensiblement nulle ;
- Le bore, notamment dans la matrice, n'est pas sous forme TiB2 ;
- La teneur en phases AlN et/ou d'un de ses polytypes, notamment 2H, 8H, 12H, 15R, 21R, et 27R, de formule $Si_{x'}Al_{y'}O_{u'}N_{v'}$, dans laquelle les indices stoechiométriques x', y', u' et v', normalisés par rapport à l'indice le plus élevé, sont tels que $0 \leq x' \leq 0,37$ et $0,60 \leq y' \leq 1$ et $0 \leq u' \leq 0,71$ et $0,76 \leq v' \leq 1$ est supérieure à 1%, supérieure à 1,5%, supérieure à 2%, et/ou inférieure ou égale à 6%, en pourcentage en masse sur la base dudit produit ;

- La teneur en phase de type AIN15R dans le produit, est supérieure à 1,0%, supérieure à 1,5%, supérieure à 1,9%, et/ou inférieure à 6%, en pourcentages en masse sur la base dudit produit. La phase du type AIN15R est définie par la formule $Si_{x'}Al_{y'}O_{u'}N_{v'}$, dans laquelle les indices stoechiométriques, normalisés par rapport à l'indice le plus élevé, sont tels que $0,12 \leq x' \leq 0,33$ et $0,78 \leq y' \leq 1$ et $0,33 \leq u' \leq 0,55$ et $0,80 \leq v' \leq 1$ ;

- La teneur en phase de formule $Si_{x''}Al_{y''}O_{u''}N_{v''}$, dans laquelle les indices stoechiométriques, normalisés par rapport à l'indice le plus élevé, sont tels que $0,43 \leq x'' \leq 0,75$ et $0 \leq y'' \leq 1$ et $0 < u'' \leq 1$ et $0,9 \leq v'' \leq 1$, dans le produit, dite « β'SiAlON », est supérieure à 3%, supérieure à 5%, et/ou inférieure à 20%, inférieure à 17%, en pourcentages en masse sur la base dudit produit ;

- La phase cristallisée « β'SiAlON » peut encore s'exprimer avec la formule $Si_{6-z}Al_zO_zN_{8-z}$, dans laquelle l'indice z est un indice stoechiométrique tel que $0<z<4,2$. La teneur en phase « β'SiAlON », dans le produit, est de préférence supérieure à 3%, supérieure à 5%, et/ou inférieure à 20%, inférieure à 17%, en pourcentages en masse sur la base dudit produit. De préférence, z est supérieur à 1, voire supérieur à 2 et/ou inférieur à 4, voire inférieur à 3,5.

- Le rapport massique de la quantité de phase du type AIN15R sur la quantité de phase β'SiAlON dans le produit est supérieur à 0,1, supérieur à 0,15, voire supérieur à 0,2, supérieur à 0,3, et/ou inférieur à 1,0, de préférence est inférieur à 0,7 ;

- La teneur en phase $Si_2ON_2$, dans le produit, est inférieure à 5%, inférieure à 3%, inférieure à 1%, inférieure à 0,5%, voire sensiblement nulle, en pourcentages en masse sur la base dudit produit ;

- La teneur en phase AIN, dans le produit, est inférieure à 5%, inférieure à 3%, inférieure à 1%, inférieure à 0,5%, voire sensiblement nulle, en pourcentages en masse sur la base dudit produit ;

- La teneur en phase $Si_3N_4$, dans le produit, est inférieure à 5%, inférieure à 3%, inférieure à 1%, inférieure à 0,5%, voire sensiblement nulle, en pourcentages en masse sur la base dudit produit ;

- Dans un mode de réalisation, le produit présente une teneur en phosphore inférieure à 0,04%, en pourcentage en masse sur la base du produit ;

- La teneur en métaux résiduels, en particulier en silicium, dans le produit, est inférieure à 1,8 %, voire 1,5 %, voire inférieure à 1 %, voire inférieure à 0,5%, en pourcentages massiques sur la base du produit ;

- Dans un mode réalisation, le produit présente une teneur totale en oxydes alcalino-terreux, en particulier en CaO et/ou en MgO, inférieure à 2 %, de préférence inférieure à 1,5 % et/ou supérieure à 0,2 %, voire supérieure à 0,4 %, en pourcentages massiques sur la base du produit ;

- Le produit présente une teneur totale en oxydes de métaux alcalins, notamment $Na_2O$ et $K_2O$, inférieure à 1 %, en pourcentage massique sur la base du produit ;

- Le produit présente une teneur totale en oxydes de métaux alcalins supérieure à 0,4 %, en pourcentage massique sur la base du produit ;

- La teneur en azote dans le produit est supérieure à 3,1 %, supérieure à 3,5 %, voire supérieure ou égale à 4 %, en pourcentage massique sur la base du produit ;

- Le produit présente une teneur en bore telle que le rapport du bore sur l'azote B/N est supérieur à 0,01, supérieur à 0,03, supérieur à 0,10, et/ou inférieur à 0,4, inférieur à 0,35, inférieur à 0,3 ;

- La porosité ouverte du produit fritté est supérieure à 5 %, supérieure à 10 % et/ou inférieure à 25 %, inférieure à 20 % et/ou inférieure à 17%

- De préférence, la porosité fermée du produit fritté est inférieure à 2%, de préférence inférieure à 1% ;

- Le produit fritté est obtenu par frittage d'une préforme fabriquée par pressage, pilonnage, extrusion, coulage, vibration ou issue de la combinaison de ces différentes techniques de façonnage. En particulier le produit peut être en un matériau choisi parmi un béton ou un pisé, façonné ou non façonné.

Dans différents modes de réalisation, le granulat d'un produit fritté selon l'invention peut encore présenter une ou plusieurs des caractéristiques optionnelles suivantes :

- De préférence, le granulat présente une température de fusion et de dissociation thermique supérieure à 1700°C ;
- Dans un mode de réalisation, le granulat n'est pas azoté ;
- Dans un mode de réalisation, le granulat ne comporte pas de bore ;
- Dans un mode de réalisation, le granulat ne comporte pas de phase cristallisée selon la formule précédente $Si_xAl_yO_uN_v$,
- Dans un mode de réalisation, le granulat ne comporte pas de phase $Si_3N_4$ ou/et pas de $Si_2ON_2$.

Dans différents modes de réalisation, la matrice d'un produit fritté selon l'invention peut encore présenter une ou plusieurs des caractéristiques optionnelles suivantes :

- La matrice comporte plus de 0,2 %, plus de 0,5 %, de préférence plus de 1%, de préférence plus de 1,5%, de préférence plus 1,8%, de préférence plus de 2%, de préférence plus de 2,5%, de préférence plus de 3%, de préférence plus 3,5% de bore, en pourcentage en masse sur la base de la matrice. De préférence, la matrice comporte moins de 30%, moins de 20 %, ou moins de 15 %, voire moins de 12%, moins de 10%, voire moins de 9%, moins 7%, moins de 5%, voire moins de 4% de bore, en pourcentage en masse sur la base de la matrice ;
- La matrice est de préférence obtenue par frittage réactif ;
- Au moins 90%, voire 95 %, voire 99 %, voire 100 % en masse de la partie cristallisée azotée du produit fait partie de la matrice ;
- La partie de la matrice complémentaire à la partie cristallisée azotée de ladite matrice comprend, voire être constituée, d'un liant hydraulique, d'une résine, en particulier une résine thermodurcissable, ou d'un mélange de ces constituants ;
- La partie cristallisée azotée représente au moins 80 %, voire au moins 90%, voire au moins 95 %, voire sensiblement 100 % de la masse de la matrice, le complément à 100 % étant par exemple constitué par des métaux résiduels et des oxydes, en particulier de l'alumine ;
- L'alumine, le silicium métallique, et ladite phase cristallisée de formule $Si_xAl_yO_uN_v$, telle que définie ci-dessus, représentent ensemble plus de 80% de la masse de la matrice ;
- Ladite matrice comporte de préférence une phase du type AlN15R telle que définie ci-dessus ;
- La phase du type AlN15R représente plus de 18%, voire plus de 20%, de la masse de la matrice ;
- La matrice comporte une phase « β'SiAlON » telle que définie ci-dessus ;
- La phase β'SiAlON représente plus de 60 %, ou plus de 70 %, voire plus de 75 % de la masse de la matrice ;
- Le rapport massique de la quantité de phase du type AlN15R sur la quantité de phase β'SiAlON dans la matrice est compris entre 0,3 et 1,0, de préférence est inférieur à 0,7 ;
- Ladite matrice est constituée, pour plus de 80% en masse, de phase β'SiAlON et, le cas échéant, de phase du type AlN15R, en pourcentage en masse sur la base de la matrice ;
- La phase β'SiAlON et la phase du type AlN15R représentent ensemble plus de 80 %, voire plus de 90 %, voire plus de 95 %, ou plus de 99 %, voire sensiblement 100 % de la masse de la matrice, le complément à 100 % étant de préférence constitué par d'autres phases azotées, notamment BN, TiN, $Si_3N_4$, ZrN, $Si_2ON_2$, O'SiAlON de formule $Si_{2-z}Al_zO_{z+1}N_{2-z}$ avec z > 0 ou X SiAlON (voir US 5,521,129), éventuellement des traces d'alumine, voire de silice, et les impuretés et des traces éventuelles d'aluminium et/ou de silicium métallique ;
- La teneur en phase $Si_2ON_2$ et/ou en phase AlN et/ou en phase $Si_3N_4$ et/ou en phase hexagonale de BN, dans la matrice, est inférieure à 20%, inférieure à 10%, inférieure à 5%, inférieure à 1%, inférieure à 0,5%, voire sensiblement nulle, en pourcentages en masse sur la base de ladite matrice ;
- Dans un mode de réalisation, la matrice présente une teneur en phosphore inférieure à 0,2%, en pourcentage en masse sur la base de la matrice du produit ;
- Dans un mode de réalisation préféré, la matrice comporte des particules de carbure de silicium SiC dispersées dans la matrice. De préférence, les particules de SiC présentent une taille médiane comprise entre 0,1 et 100 microns, de préférence inférieure à 30 microns, de manière encore plus préférée, inférieure à 10 microns ;
- Dans un mode de réalisation, le produit selon l'invention comporte plus de 0,5%, de préférence plus de 1%, de préférence plus de 2%, de préférence plus de 3%, voire plus de 4% et/ou, de préférence, moins de 10%, de préférence moins de 7% de particules fines de SiC, en pourcentages en masse sur la base du produit ;
- Le rapport massique B/SiC dans le produit est de préférence supérieur ou égal à 0,025, supérieur à 0,05, supérieur à 0,1 et/ou inférieur ou égal à 5, inférieur à 3, inférieur à 2, inférieur à 1, inférieur à 0,5, voire inférieur à 0,4. De préférence le rapport massique B/SiC dans le produit est supérieur ou égal à 0,025, supérieur à 0,05, supérieur à 0,1 et/ou inférieur à 1, inférieur à 0,5, voire inférieur à 0,4 en ne considérant que les particules fines de SiC.

Dans un mode de réalisation, toutes les phases contenant Si, Al, O, et N, en particulier toutes les phases de la matrice contenant Si, Al, O, et N, sont des phases cristallisées.

Dans un mode de réalisation, l'invention concerne un bloc fritté dont au moins une partie, voire la totalité, est constituée par un produit fritté selon l'invention. Un bloc fritté selon l'invention peut encore présenter une ou plusieurs des caractéristiques optionnelles suivantes :

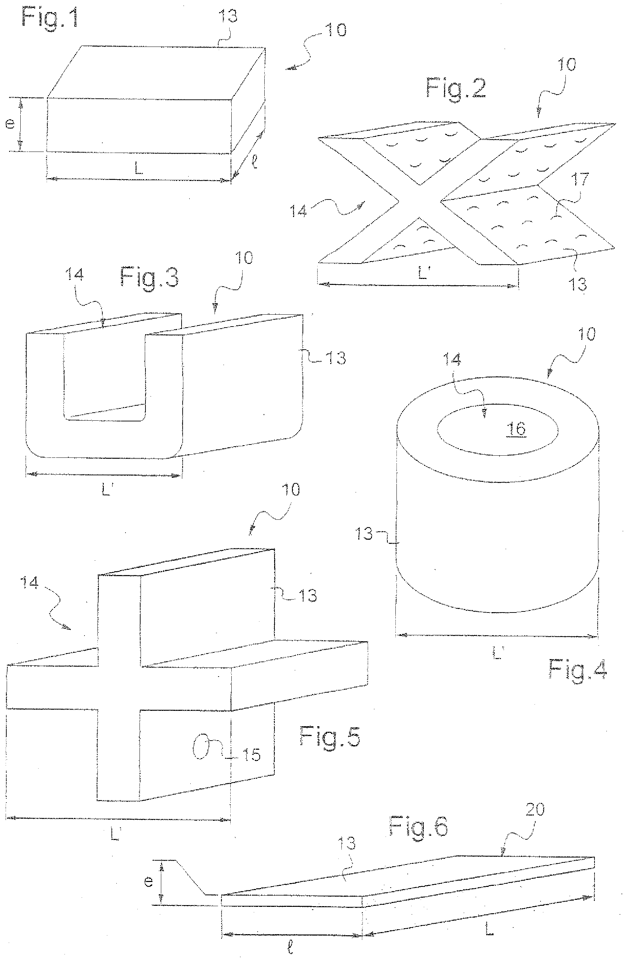

- Le bloc selon l'invention peut présenter différentes formes, notamment de pièces ou de briques, de gros blocs ou de plaques minces ;
- Le bloc fritté présente une épaisseur « e » inférieure à 100 mm, 50 mm, voire 25 mm. Il peut en particulier présenter la forme d'une plaque, comme par exemple représenté sur la figure 6, dont au moins une partie, de préférence la totalité, est constituée par un produit fritté selon l'invention ;
- Le bloc présente une surface extérieure de forme générale convexe, par exemple une forme parallélépipédique, ou une surface extérieure de forme générale présentant des concavités. Autrement dit, la surface extérieure du bloc comporte des concavités modifiant sa forme générale. Par exemple le bloc peut être de section transversale en forme de « U », de « + », ou de « X ». Le bloc peut présenter, localement, un ou plusieurs trous, traversants ou non traversants, par exemple en forme d'alvéole ou de trou tubulaire, rectiligne ou non, par exemple prévus pour faciliter le passage éventuel d'un fluide (liquide ou gaz) ou augmenter les surfaces d'échange thermique ;

- Le bloc est un "gros" bloc qui présente au moins une dimension (épaisseur, longueur, ou largeur) d'au moins 120 mm, de préférence d'au moins 150 mm, voire 200 mm, voire 300 mm, voire 400 mm, voire 600 mm ou même 800 mm, voire encore 1000 mm. En particulier l'épaisseur, la longueur et la largeur du gros bloc sont d'au moins 120 mm, voire 150 mm, voire 300 mm, voire 400 mm, 600 mm ou même 800 mm, voire encore 1000 mm. L'utilisation de gros blocs permet avantageusement de réduire le nombre de joints par rapport à un assemblage de briques réfractaires. Les attaques corrosives par l'intermédiaire des joints sont ainsi limitées. L'utilisation de gros blocs permet également une installation rapide du revêtement réfractaire. Enfin, la fabrication de gros blocs permet, sans modifier l'environnement autour de la préforme, de fabriquer des blocs hétérogènes très performants. Dans de tels blocs hétérogènes, seule la région centrale est en un produit fritté selon l'invention, comme décrit ci-dessus ;
- Notamment pour la fabrication de gros blocs, la taille médiane des grains du granulat est supérieure à 2 mm, voire supérieure à 4 mm et/ou inférieure à 15 mm, inférieure à 10 mm, ou inférieure à 6 mm ;
- Notamment pour la fabrication de produits minces comme des plaques, la taille médiane des grains du granulat est supérieure à 5 $\mu$m, voire supérieure à 10 $\mu$m, supérieure à 30 $\mu$m ou supérieure à 50 $\mu$m et/ou inférieure à 3 mm, inférieure à 2 mm, inférieure à 1 mm, inférieure à 500 $\mu$m, voire inférieure à 100 $\mu$m ;
- Une région centrale du bloc fritté est en un produit fritté conforme à l'invention ;
- Une région périphérique du bloc fritté n'est pas en un produit fritté conforme à l'invention ;
- La région périphérique est en un produit fritté conforme à l'invention ;
- Dans un mode de réalisation, tout le bloc fritté, sauf la « peau », c'est-à-dire sauf la couche superficielle s'étendant, à partir de la surface, sur une épaisseur supérieure à 1 mm, de préférence supérieure à 5 mm, de manière encore plus préférée supérieure à 20 mm, est en un produit fritté conforme à l'invention.

L'invention concerne encore un procédé de fabrication d'un produit fritté, notamment d'un bloc fritté, selon l'invention, ledit procédé comportant les étapes successives suivantes :

a) préparation d'une charge de départ comportant

- un granulat réfractaire,
- des précurseurs de phase cristallisée de formule $Si_xAl_yO_uN_v$, et
- du bore métal et/ou un ou plusieurs composés du bore et/ou précurseurs de bore ou d'un composé de bore,

b) versement de ladite charge de départ dans un moule ;
c) mise en forme de la charge de départ à l'intérieur du moule, par compaction, de manière à former une préforme ;
d) démoulage de ladite préforme ;
e) optionnellement, séchage de la préforme, de préférence de manière jusqu'à ce que l'humidité résiduelle soit comprise entre 0 et 0,5 % ;
f) cuisson de la préforme sous atmosphère réductrice d'azote ou sous atmosphère non oxydante si de l'azote est apporté par la charge de départ, de préférence à une température comprise entre 1300 et 1600°C, de manière à obtenir un bloc.

Selon l'invention, la charge de départ est déterminée de manière à ce que, à l'issue de l'étape f), le bloc soit conforme à l'invention ou de manière à ce que la charge de départ soit un mélange particulaire conforme à l'invention.
De préférence, le composé organométallique est choisi dans le groupe constitué par $B_4C$, $CaB_6$, et leurs mélanges. De préférence, le composé organométallique est $B_4C$. De préférence encore, la charge de départ ne comporte pas d'autre composé de bore que ledit composé organométallique.
L'invention concerne aussi une charge de départ adaptée pour conduire par frittage réactif à un produit selon l'invention.
L'invention concerne enfin un dispositif comportant, voire étant constitué par, un produit selon l'invention ou fabriqué ou pouvant être fabriqué suivant un procédé selon l'invention, ladite pièce étant choisie parmi :

- un revêtement intérieur réfractaire d'un four, en particulier d'un four métallurgique, notamment d'un haut-fourneau et, en particulier un revêtement intérieur d'un étalage ou d'une ceinture d'une tuyère ou d'un creuset ;
- un revêtement d'un four de cuisson d'anodes, notamment destinées à l'électrolyse, par exemple de l'aluminium, ou un cubilot destiné à la refonte de métaux ou à la fusion de roches ;
- un revêtement d'un échangeur thermique ;

- un revêtement d'un incinérateur d'ordures ménagères ;
- un revêtement anti-abrasion ;
- une pièce céramique intervenant dans un dispositif de protection ou de régulation des jets de fonte ou d'acier, par exemple une plaque d'obturateur à tiroir, un tube protecteur de jet, une busette immergée ou une quenouille ;
- une pièce céramique intervenant dans un dispositif de brassage, soit mécanique, soit par insufflation de gaz, dans le métal en fusion ;
- une brique de siège servant de logement et support à un dispositif d'insufflation de gaz ou à un dispositif d'insufflation de régulation d'un jet de métal, ainsi qu'une dalle d'impact de poche ou de répartiteur ;
- un étalage, une ceinture d'une tuyère, un creuset, un ventre, une cuve d'un haut-fourneau ;
- un accessoire pour la fonderie de la fonte, de l'acier et des aciers spéciaux tel qu'une busette, un tampon ou un déversoir ;
- un support pour la cuisson de produits céramiques, de préférence sous la forme d'un produit mince.

L'invention concerne aussi un dispositif choisi parmi un four, un échangeur thermique et un support pour la cuisson de produits céramiques, remarquable en ce qu'il comporte un produit réfractaire fritté selon l'invention. Le four peut être en particulier un four d'incinérateur, un four métallurgique, notamment un haut-fourneau ou un four de cuisson d'anodes. L'échangeur thermique peut notamment être celui d'un incinérateur d'ordures ménagères.

**Définitions**

On appelle « produit non façonné » un produit, humide ou sec, ne présentant pas de rigidité intrinsèque, comme une poudre ou une charge de départ humide apte à être versée dans un moule.

Au contraire, on appelle « produit façonné » un matériau structuré, c'est-à-dire conservant sa forme lorsqu'il est manipulé, comme une préforme démoulée ou un produit fritté.

On appelle « béton non façonné » un mélange particulaire sec ou humide comportant au moins un agent de prise hydraulique et apte à prendre en masse de manière à constituer un matériau sec et solide dont la microstructure est constituée par un granulat dont les grains sont solidarisés au moyen d'une matrice. Un béton non façonné est apte à être appliqué par coulage, associé à une opération de vibration ou non, ou par projection.

On appelle « pisé non façonné » un mélange particulaire sec ou humide ne comportant pas d'agent de prise hydraulique et apte à prendre en masse de manière à constituer un matériau sec et solide dont la microstructure est constituée par un granulat dont les grains sont solidarisés au moyen d'une matrice, appelé « pisé façonné ». Un pisé non façonné est apte à être appliqué par damage et/ou pressage, associé ou non à une opération de vibration. Dans cette définition, on inclut en particulier les pisés couramment appelés « pisés secs », en anglais « dry vibrating céments », et les masses à damer, en anglais « ramming mixes ».

La forme d'un béton ou d'un pisé façonné peut être quelconque. Le béton ou le pisé façonné peut notamment présenter la forme d'un bloc fritté ou d'une couche, par exemple lorsqu'il résulte de la prise en masse d'un revêtement. Classiquement, le béton ou le pisé façonné est obtenu par prise en masse d'un mélange particulaire qui a subi une étape d'activation, par exemple par humidification avec de l'eau.

On appelle « frittage » un traitement thermique par lequel le produit forme une microstructure constituée d'un granulat dont les grains sont solidarisés au moyen d'une matrice. Un produit fritté selon l'invention comporte une matrice contenant au moins une phase de formule $Si_xAl_yO_uN_v$ telle que définie ci-dessus, obtenue par frittage sous atmosphère non oxydante si de l'azote est apporté par au moins un des constituants de la charge de départ ou par frittage sous azote, de préférence à une température comprise entre 1300 et 1600°C, ce dernier type de procédé, permettant un frittage réactif sous azote, étant bien connu de l'homme du métier.

Par « frittage sous azote », on entend un frittage dans un environnement gazeux comportant plus de 90%, de préférence plus de 95% ou, de préférence encore, sensiblement 100% d'azote, en pourcentage volumique. Un tel environnement gazeux est appelé « environnement azoté ».

On qualifie de « résiduel » un constituant présent dans la charge de départ et encore présent dans le produit fritté obtenu à partir de cette charge de départ.

Dans un produit fritté selon l'invention, on appelle « granulat » l'ensemble des grains réfractaires liés par la matrice et qui, lors du frittage, ont sensiblement conservé la forme et la nature chimique qu'ils présentaient dans la charge de départ. Ainsi, en fonction de la taille de ses particules par exemple, une poudre, par exemple d'alumine, pourrait être considérée comme un granulat ou comme un précurseur de la matrice. En particulier, à la différence des particules à l'origine de la matrice, ou « précurseurs de la matrice », les grains du granulat ne sont pas complètement fondus ou transformés pendant le frittage.

Par extension, on appelle également « granulat » l'ensemble de ces grains tels qu'ils se présentaient dans la charge de départ. La nature du granulat dans un produit fritté selon l'invention n'est pas limitative, pourvu que les grains de granulat soient en un matériau réfractaire, c'est-à-dire présentant un point de fusion ou de dissociation supérieur à 1000°C.

Dans un mode de réalisation de l'invention, le granulat est une matière différente des constituants de la matrice.

Dans un autre mode de réalisation de l'invention, le granulat est en une matière identique à certains des constituants de la matrice. Par exemple, le granulat peut incorporer une phase cristallisée azotée comportant une phase cristallisée de formule $Si_xAl_yO_uN_v$. Une observation en coupe permet cependant de distinguer la matrice du granulat sans connaître le procédé de fabrication, le granulat présentant généralement une taille médiane très supérieure à celle des particules de la matrice, classiquement au moins 2 fois, au moins 5 fois, voire au moins 10 fois supérieure.

Par « matrice », on entend une phase cristallisée ou non, assurant une structure continue entre les grains du granulat et obtenue, lors du frittage, à partir des constituants de la charge de départ et éventuellement des constituants de l'environnement gazeux de cette charge de départ. Une matrice entoure sensiblement les grains du granulat, c'est-à-dire les enrobe.

La « matrice » désigne la phase liante résultant du frittage et doit donc être distinguée de la phase liante éventuellement présente avant frittage, par exemple du fait de l'activation d'un liant hydraulique ou polymérisation d'une résine. Un frittage d'un granulat en phase cristallisée de formule $Si_xAl_yO_uN_v$ ne conduit pas à une « matrice » en phase cristallisée de formule $Si_xAl_yO_uN_v$. Par exemple, les procédés de fabrication décrits dans EP 0 242 849, JP 07126072, US 4 871 698, ou JP 07069744 ne conduisent pas à une matrice en phase cristallisée de formule $Si_xAl_yO_uN_v$.

Une matrice obtenue par frittage réactif présente des particularités. Notamment, lors du frittage réactif, il se produit une nitruration des métaux précurseurs des phases cristallisées azotées. L'augmentation de volume qui en résulte, typiquement de 1 à 30%, permet avantageusement de combler les pores de la matrice et/ou de compenser le retrait occasionné par le frittage des grains. Le frittage réactif permet ainsi d'améliorer la résistance mécanique du produit fritté. Les produits frittés réactivement présentent ainsi une porosité ouverte et/ou fermée significativement plus faible que celle(s) des autres produits frittés dans des conditions de température et de pression similaires. A la cuisson, les produits frittés réactivement ne présentent sensiblement pas de retrait.

On appelle « précurseur de la matrice » un constituant de la charge de départ qui se retrouve dans la matrice du produit fritté fabriqué ou qui, lors de cette fabrication, est transformé en un constituant de ladite matrice.

Une matrice peut comprendre des particules ajoutées dans la charge de départ et n'ayant pas réagi pendant le frittage. Par exemple une observation au microscope à balayage et des techniques de type EDS ou EDX ou de microdiffraction X montrent que la matrice d'un produit comportant un granulat de corindon comporte généralement des particules d'alumine. De manière similaire, la matrice d'un produit comportant un granulat réfractaire oxyde, par exemple d'alumine cristallisée, et notamment de corindon et/ou d'alumine tabulaire peut comporter des particules de carbure de silicium.

La « partie cristallisée azotée » d'un produit comprend l'ensemble des phases cristallisées d'un produit. L'étude de la composition d'un produit par diffraction X conduit à des pourcentages sur la base de l'ensemble des phases cristallisées. La diffraction X permet également de déterminer la nature des phases cristallisées, et donc d'établir des compositions sur la base de la partie cristallisée azotée.

Par « teneur en bore », on entend une quantité de bore, sans limitation quant à la forme du bore (composés de bore, bore métal,...).

Par « dans la masse » d'un produit, on entend « distribué dans tout le produit ». En particulier le constituant considéré n'est pas uniquement présent dans une couche superficielle de ce produit. Pour le bore par exemple, une telle distribution peut notamment résulter d'un mélange du bore ou d'un précurseur du bore avec les autres constituants du produit fritté au moment de la préparation de la charge de départ. De préférence, la variation de la teneur en bore mesurée localement dans la matrice du produit fritté est inférieure à 10%, de préférence inférieure à 5%, de préférence inférieure à 2%, voire sensiblement nulle, entre deux points de mesure quelconques.

Par « impuretés », on entend les constituants inévitables, introduits nécessairement avec les matières premières ou résultant de réactions avec ces constituants. Les impuretés ne sont pas des constituants nécessaires, mais seulement tolérés.

Dans un matériau façonné, on appelle « taille » d'une particule ou d'un grain la moyenne entre sa plus grande dimension et sa plus petite dimension, ces dimensions étant mesurées sur une coupe dudit matériau.

Dans un matériau non façonné, on appelle « taille » d'une particule ou d'un grain sa plus grande dimension mesurée sur une image de cette particule. La mesure de la taille des grains ou des particules d'un ensemble s'effectue classiquement à partir d'une image de cet ensemble versé sur un feutre autocollant.

On appelle « taille médiane » d'un ensemble de particules ou de grains, généralement notée $D_{50}$, la taille divisant les grains ou les particules de cet ensemble en première et deuxième populations égales en masse, ces première et deuxième populations ne comportant que des grains présent une taille supérieure, ou inférieure respectivement, à la taille médiane.

On appelle «particules fines» des particules présentant une taille inférieure à 100 microns et supérieure à 0,1 micron. De préférence, la taille médiane des particules fines de SiC optionnelles d'un produit selon l'invention est inférieure à 30 microns, de préférence inférieure à 10 microns.

On appelle « compaction » toute méthode de mise en forme, notamment par pressage, extrusion, coulage, vibration, pilonnage ou par une technologie combinant ces différentes techniques.

On appelle ci-après "gros bloc" un bloc présentant une forme telle que la plus grande sphère inscrite dans le volume de matière dudit bloc présente un diamètre d'au moins 150 mm. Autrement dit, il est possible d'extraire d'un gros bloc une sphère pleine de matière et présentant un diamètre d'au moins 150 mm.

On appelle « charge de base », la partie de la charge de départ constituée par les constituants réfractaires, à l'exception des constituants contenant du bore.

Sauf mention contraire, tous les pourcentages relatifs à la composition du produit, fritté ou non, relatifs à la matrice ou relatifs à la charge de départ, sont des pourcentages massiques.

Par « comportant », il y a lieu de comprendre « comportant au moins », sauf indication contraire. Par exemple, la matrice d'un produit selon l'invention peut comporter plusieurs phases cristallisées de formule $Si_xAl_yO_uN_v$.

### Brève description des figures

D'autres caractéristiques et avantages de l'invention apparaîtront encore à la lecture de la description détaillée qui va suivre et à l'examen du dessin annexé dans lequel les figures 1 à 5, et 7 représentent, en perspective, différentes formes de blocs frittés selon l'invention et la figure 6 représente, en perspective, un exemple de plaque mince selon l'invention.

### Description détaillée

Pour fabriquer un produit réfractaire fritté selon l'invention, on peut procéder suivant les étapes décrites précédemment.

A l'étape a), les matières particulaires sont classiquement mélangées jusqu'à obtention d'un mélange homogène.

La nature et les quantités de matières premières sont déterminées de manière à ce que le bloc en produit réfractaire obtenu à l'issue de l'étape f) soit conforme à l'invention.

La façon de déterminer les proportions des constituants de la charge de départ est parfaitement connue de l'homme du métier. Par exemple, l'homme du métier sait que le carbure de silicium présent dans la charge de départ se retrouve dans le produit fritté. Il sait également déterminer quels constituants vont se transformer pour constituer la matrice.

Certains oxydes peuvent être apportés par les additifs classiquement utilisés pour fabriquer des produits, par exemple les agents de frittage, les dispersants comme les polyphosphates de métaux alcalins ou les dérivés méthacrylates. La composition de la charge de départ peut donc varier, notamment en fonction des quantités et de la nature des additifs présents, ainsi que du degré de pureté des matières premières utilisées.

La nature du granulat n'est pas limitative.

De préférence, le granulat est composé pour plus de 70 %, voire pour plus de 80 %, voire plus de 90 %, voire pour sensiblement 100 %, en masse, de grains d'alumine, et notamment de corindon, blanc ou noir, ou d'alumine tubulaire, et/ou de mullite ou de précurseurs de mullite, et/ou d'oxyde de chrome, et/ou de zircone, et/ou de zircon et/ou de nitrures, et notamment de nitrure de silicium $Si_3N_4$, et/ou de carbures, et notamment de carbure de silicium SiC. Il peut aussi être formé par des grains constitués d'un mélange des constituants précédents.

Dans un mode de réalisation, le granulat comporte des grains de corindon et/ou de carbure de silicium SiC, voire est constitué de tels grains.

Dans un mode de réalisation, et notamment lorsqu'une conductivité thermique élevée ou est recherchée, par exemple pour fabriquer une paroi d'un four de fabrication d'anodes destinées à l'électrolyse de l'aluminium ou un revêtement d'incinérateur d'ordures ménagères ou celui d'un échangeur thermique, le granulat comporte des grains de carbure de silicium SiC, voire est constitué de tels grains. Le produit peut alors comporter plus de 5% de SiC, en pourcentage en masse sur la base du produit.

Dans un mode de réalisation, au moins 90% en masse des grains du granulat ont une taille comprise entre 150 $\mu$m et 15 mm.

Notamment pour la fabrication de pièces ou de briques, voire de gros blocs, il est préférable qu'au moins 50%, voire au moins 60% ou au moins 70% en masse, des grains de granulat présentent une taille supérieure à 0,2 mm et/ou au moins 15%, voire au moins 20%, voire au moins 25% des grains présentent une taille supérieure à 2 mm, voire supérieure à 3 mm ou supérieure à 5 mm, et/ou au moins 90%, voire au moins 95% en masse des grains de granulat présentent une taille inférieure à 20 mm, voire inférieure à 15 mm, voire inférieure à 10 mm ou inférieure à 5 mm. Notamment pour la fabrication de gros blocs, il est également préférable que la taille médiane $D_{50}$ des grains du granulat soit supérieure à 2 mm, voire supérieure à 4 mm et/ou inférieure à 15 mm, inférieure à 10 mm, ou inférieure à 6 mm.

Notamment pour la fabrication de produits minces, il est préférable que la taille médiane $D_{50}$ des grains du

granulat soit supérieure à 5 $\mu$m, voire supérieure à 10 $\mu$m, supérieure à 30 $\mu$m ou supérieure à 50 $\mu$m et/ou inférieure à 3 mm, inférieure à 2 mm, inférieure à 1 mm, inférieure à 500 $\mu$m, voire inférieure à 100 $\mu$m.

Outre le granulat, la charge de départ peut comporter de l'alumine calcinée, présentant de préférence une taille médiane inférieure à 10 microns, de préférence en une quantité supérieure à 5% et/ou inférieure à 20%, de préférence inférieure à 15%, de préférence inférieure à 12%, de préférence inférieure à 10%, en pourcentage massique sur la base de la matière minérale sèche de la charge de départ,

La charge de départ peut encore comporter du silicium métallique, présentant de préférence une taille médiane inférieure à 100 microns et/ou supérieure à 20 microns, voire supérieure à 50 microns, de préférence en une quantité supérieure à 5%, de préférence supérieure à 6%, de préférence supérieure à 6,5%, de préférence supérieure à 7%, et/ou inférieure à 20%, de préférence inférieure à 15%, de préférence inférieure à 10%, de préférence inférieure à 9%, en pourcentage massique sur la base de la matière minérale sèche de la charge de départ,

La charge de départ peut également comporter de l'aluminium métallique, présentant de préférence une taille médiane inférieure à 100 microns et/ou supérieure à 20 microns, voire supérieure à 50 microns, de préférence en une quantité supérieure à 0,5%, de préférence supérieure à 1,0%, de préférence supérieure à 1,5%, de préférence supérieure à 2,0%, et/ou inférieure à 10%, de préférence inférieure à 7,0%, de préférence inférieure à 5,0%, de préférence inférieure à 4,5%, de préférence inférieure à 4,0%, de préférence inférieure à 3,5%, de préférence inférieure à 3,0%, en pourcentage massique sur la base de la matière minérale sèche de la charge de départ.

De préférence, le rapport massique entre les quantités de silicium métallique et d'aluminium métallique dans la charge de départ est supérieur à 1,0, préférence supérieur à 1.5, préférence supérieur à 2,0, préférence supérieur à 2,5, voire supérieur à 3,0, et/ou inférieur à 6,0, de préférence inférieur à 5,0, de préférence inférieur à 4,5, de préférence inférieur à 4,0. voire inférieur à 3,5.

Ces quantités d'alumine calcinée, de silicium métallique et d'aluminium métallique se sont avérées particulièrement adaptées pour améliorer la résistance aux chocs thermiques sévères.

Le bore est de préférence apporté dans la charge de départ sous la forme d'une poudre. Le bore peut notamment être apporté sous la forme d'un composé de bore choisi dans le groupe formé par le bore métallique et ses alliages à l'état amorphe ou cristallisé, les oxydes, les carbures, les nitrures, les fluorures, les alliages métalliques, et les composés organométalliques contenant du bore.

La forme sous laquelle le bore est introduit dans la charge de départ peut cependant conduire, pendant la nitruration, à la formation d'une quantité substantielle, de phase hexagonale de BN.

De préférence, le bore est introduit dans la charge de départ sous une forme limitant la formation de phase hexagonale de BN pendant la nitruration. De préférence, la teneur en phase hexagonale de BN dans la matrice est en effet inférieure à 20%, inférieure à 15%, inférieure à 12%, inférieure à 10%, inférieure à 5 %, inférieure à 3 %, inférieure à 2 %, inférieure à 1 %, inférieure à 0,5 %, en pourcentage en masse sur la base de ladite matrice. De préférence, la matrice ne comporte pas de phase hexagonale de BN.

De simples essais permettent de déterminer la quantité de phase hexagonale de BN générée en fonction de la forme sous laquelle le bore est apporté dans la charge de départ, pour limiter la quantité de phase hexagonale de BN dans le produit fritté. Le bore est de préférence apporté dans la charge de départ, au moins en partie, voire exclusivement, sous la forme d'un composé organométallique choisi parmi $B_4C$, CaB6,

TiB2 ou $H_3BO_3$ et leurs mélanges, de préférence choisi dans le groupe constitué par $B_4C$, CaB6, et leurs mélanges. De préférence encore, le bore est apporté dans la charge de départ sous la forme $B_4C$. Comme le montrent les exemples ci-après, le $B_4C$ ne génère sensiblement pas de phase hexagonale de BN pendant la nitruration.

Plusieurs des composés de bore décrits ci-dessus peuvent être présents dans la charge de départ.

De préférence, la charge de départ comporte plus de 0,1 %, plus de 0,5 %, plus de 1 %, plus de 1,5%, plus de 2,0% et/ou moins de 6 %, moins de 5 %, moins de 4 %, de Bore élémentaire, en pourcentage massique sur la base de la matière minérale sèche de la charge de départ.

De préférence, la charge de départ comporte plus de 0,1 %, plus de 0,5 %, plus de 1 %, plus de 1,5%, plus de 2,0% et/ou moins de 6 %, moins de 5 %, moins de 4 %, de $B_4C$, en pourcentage massique sur la base de la matière minérale sèche de la charge de départ, de préférence sous la forme de particules fines (présentant une taille inférieure à 100 microns et supérieure à 0,1 micron).

Dans un mode de réalisation, la charge de départ comporte plus de 0,2 %, plus de 0,4 %, et/ou moins de 5%, moins de 4 %, moins de 2 % de CaB6, de préférence sous la forme de particules fines, en pourcentage massique sur la base de la matière minérale sèche de la charge de départ.

Des additifs de mise en forme peuvent notamment être utilisés. Ces additifs comprennent des plastifiants, par exemple des amidons modifiés ou des polyéthylènes glycol et des lubrifiants, par exemple des huiles solubles ou des dérivés de stéarates. Les additifs comprennent également, classiquement, un ou plusieurs liants dont la fonction est de former avec les matières premières de la charge une masse suffisamment rigide pour conserver sa forme jusqu'à la fin de l'étape c). Le choix du liant est dépendant de la forme souhaitée. Tout liant connu ou mélange de liants connus peut être utilisé. Les liants sont de préférence « temporaires », c'est-à-dire qu'ils sont éliminés en tout ou en partie lors des étapes de séchage et de cuisson de la pièce. De préférence encore, au moins l'un des liants temporaires est une solution de dérivés d'amidon modifié, une solution aqueuse de dextrine ou de dérivés de la lignone, en particulier une solution aqueuse de carboxyméthyl-cellulose ou de lignosulfate de calcium, une solution d'un agent de synthèse tel que l'alcool de polyvinyle, une résine phénolique ou une autre résine de type époxy, un alcool furfurylique, ou un mélange de ceux-ci.

De préférence encore, la quantité de liant, notamment de liant temporaire, et/ou de plastifiant est comprise entre 0,5 et 7 %, de préférence inférieure à 4%, en pourcentage en masse sur la base de la matière minérale sèche de la charge de départ.

Un liant hydraulique de type ciment à base de chaux, par exemple un ciment réfractaire, peut être avantageux pour assurer le durcissement des produits sous forme de gros blocs après façonnage et conférer une bonne résistance mécanique au produit fritté. La teneur totale en oxydes alcalino-terreux, et notamment en CaO, dans la charge de départ peut être supérieure à 0,2%, en pourcentage en masse par rapport à la masse minérale sèche de la charge de départ.

Optionnellement, du phosphore peut être apporté dans la charge de départ, sous forme liquide ou sous la forme d'une poudre. Il peut être en particulier apporté sous la forme de phosphate, et notamment d'hydrogénophosphate, ou sous la forme d'un polyphosphate, et notamment d'aluminophosphate ou de polyphosphate de métaux alcalins, par exemple d'héxamétaphosphate de sodium. Des composés organophosphorés ou des polymères organophosphorés peuvent également convenir. De préférence, en particulier pour la fabrication de gros blocs, la quantité de phosphore est telle que le produit fritté comporte plus de 0,3 %, de préférence plus de 0,4 %, et/ou moins de 2,5 %, ou moins de 2 %, voire moins de 1,5 %, voire moins de 1 %, de phosphore, en pourcentages en masse sur la base de la matrice.

Le silicium de la matrice peut notamment être apporté, au moins en partie, par une poudre de silicium métal. Avantageusement, la mise en oeuvre d'aluminium métallique permet d'obtenir, après frittage, une matrice stable et entourant bien les grains du granulat. Des alliages mixtes contenant les éléments silicium et/ou aluminium peuvent également être utilisés.

La charge de départ sèche est malaxée à sec suffisamment pour obtenir un mélange homogène. Elle peut être conditionnée et livrée sous cette forme.

Ensuite, de l'eau est classiquement ajoutée à la charge de départ. Dans un mode de réalisation, on ajoute au moins 2%, de préférence au moins 2,5%, et/ou moins de 10%, ou moins de 8%, ou encore moins 5%, d'eau, en pourcentages en masse par rapport à la masse minérale de la charge de départ sèche. L'eau est ajoutée progressivement dans le malaxeur en fonctionnement. Le malaxage de la charge de départ est poursuivi jusqu'à obtention d'un mélange humide sensiblement homogène.

A l'étape b), le mélange humide est coulé dans un moule conformé pour la fabrication d'un bloc aux dimensions souhaitées,

A l'étape suivante de compaction c), le mélange dans le moule est compacté, de préférence par pressage. Dans le cas de gros blocs, une technique bien adaptée est la mise en forme par vibration ou "vibro-coulage", notamment en utilisant classiquement une aiguille vibrante comme celles utilisées dans le génie civil.

La préforme est ensuite démoulée (étape d)), puis mise à sécher (étape e)). Le séchage peut être effectué à une température modérément élevée. De préférence, il est effectué à une température comprise entre 110 et 200°C, de préférence sous air ou atmosphère contrôlée en humidité. Il dure classiquement entre 10 heures et une semaine selon le format de la préforme, de préférence jusqu'à ce que l'humidité résiduelle de la préforme soit inférieure à 0,5%.

La préforme démoulée présente avantageusement une résistance mécanique suffisante pour pouvoir être manipulée, transportée et éventuellement assemblée.

A une étape f), la préforme obtenue à l'issue de l'étape e) est disposée dans un four. La durée de la cuisson, généralement comprise entre 3 et 15 jours environ de froid à froid, est variable en fonction des matériaux, mais aussi de la taille et de la forme du bloc. La cuisson s'effectue de préférence sous gaz de diazote pur, appelé couramment "azote". Le cycle de cuisson est de préférence effectué sous une pression d'azote absolue voisine de 1 bar environ, mais une pression plus forte ou plus faible pourrait aussi convenir, et à une température comprise entre 1300°C et 1600°C.

La région périphérique de la préforme est en contact avec l'environnement azoté. Pendant la cuisson, l'azote de cet environnement réagit (« frittage réactif ») avec certains des constituants de la préforme, en particulier avec l'alumine calcinée, la silice sous forme micronique et les poudres métalliques, pour former une matrice et ainsi lier les grains du granulat. Cette réaction est appelée « nitruration ».

A l'issue de l'étage de cuisson, on obtient un bloc fritté selon l'invention.

En variante, et bien que cela puisse s'avérer délicat en pratique, la préforme obtenue à l'issue de l'étape e) peut être mise en place dans sa position de service sans avoir été frittée. Le frittage, effectué *in situ,* conduit alors à un produit fritté selon l'invention constitué d'un granulat lié par une matrice.

A la fin du frittage, on obtient un bloc fritté selon l'invention présentant une porosité ouverte réduite et des résistances à l'écrasement à froid et à la flexion à froid remarquables. Plus précisément, le produit fritté peut présenter une résistance à l'écrasement à froid supérieure ou égale à 50 MPa, voire supérieure à 100 Mpa, voire supérieure à 150 MPa. La forme d'un bloc fritté selon l'invention n'est pas limitative.

Le bloc fritté peut ainsi présenter au moins une dimension (épaisseur, longueur, longueur transversale hors tout ou largeur) d'au moins 120 mm, de préférence d'au moins 150 mm, voire 200 mm, voire 300 mm, voire 400 mm, voire 600 mm ou même 800 mm, voire encore 1000 mm. L'épaisseur, la longueur et la largeur du bloc fritté peuvent être d'au moins 120 mm, voire 150 mm, voire 300 mm, voire 400 mm, 600 mm ou même 800 mm, voire encore 1000 mm.

Un bloc 10 peut en particulier comporter une surface extérieure 13 convexe, par exemple être parallélépipédique (figure 1 par exemple), ou comporter une surface extérieure 13 présentant des concavités modifiant sa forme générale. Un bloc 10 peut ainsi présenter des renfoncements 14 ou des canaux de passage 16 (figure 4) pour des gaz. Par exemple, les blocs 10 peuvent être en forme de « X », de « U », de cylindre, ou de « + », comme représenté, par exemple, sur les figures 2, 3, 4 et 5, respectivement.

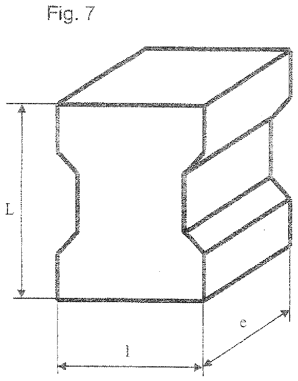

Le bloc peut aussi présenter toute forme dite « autobloquante », comme celle illustrée sur la figure 7. Les formes et les proportions de la figure 7 ne sont pas limitatives.

Quelle que soit sa forme générale, la surface extérieure 13 du bloc peut être lisse (figures 1, 3 à 5) ou porter un ou plusieurs reliefs, ou "corrugations" 17 (figure 2), et/ou un ou plusieurs trous, traversants ou non traversants, par exemple en forme d'alvéoles ou de trous tubulaires, rectilignes ou non. Cette conformation peut faciliter le passage éventuel d'un fluide (liquide ou gaz) ou augmenter les surfaces d'échange thermique.

Un produit selon l'invention peut également être utilisé pour fabriquer des produits minces 20, comme représenté sur la figure 6.

Sur les figures 1, 6 et 7, l'épaisseur, la longueur et la largeur des blocs et du produit mince ont été référencées « e », « L » et « l », respectivement. La longueur hors tout transversale a été référencée « L' » sur les figures 2 à 5.

## Exemples

Les exemples suivants, fabriqués selon les étapes a) à f) précédemment décrites, sont fournis à des fins illustratives et ne limitent aucunement l'invention.

Des blocs ont été fabriqués suivant les étapes a) à f) du procédé décrit précédemment. Une charge de départ a été fabriquée par malaxage à sec des différents constituants ajoutés sous forme de poudres. L'eau a été ensuite progressivement ajoutée dans le malaxeur en fonctionnement afin d'obtenir un mélange d'une consistance adaptée pour la mise en forme

Les matières suivantes ont été utilisées :

- granulat de corindon brun A1 à 97% d'alumine $Al_2O_3$, dont toutes les particules présentent une taille inférieure à 5mm, présentant sensiblement la distribution granulométrique suivante, en pourcentages massiques :

  2 - 5 mm : 25%
  0,2 - 2 mm : 45%
  0 - 0,2 mm : 7% ;

- granulat de corindon brun A2 à 97% d'alumine $Al_2O_3$, dont toutes les particules présentent une taille inférieure à 5mm, présentant sensiblement la distribution granulométrique suivante, en pourcentages massiques :

  2 - 5 mm : 25%
  0,2 - 2 mm : 45%
  0 - 0,2 mm : 10% ;

- granulat de carbure de Silicium, présentant sensiblement la distribution granulométrique suivante, en pourcentages massiques :

  2 - 5 mm : 20%
  0,2 - 2 mm : 40%
  0 - 0,2 mm : 20% ;

- alumine calcinée présentant une taille médiane d'environ 6 microns,
- poudre d'aluminium métal d'une taille médiane inférieure à 75 microns ;
- poudre de silicium métal de taille médiane inférieure à 75 microns ;
- poudre de carbure de silicium de taille médiane inférieure à 1 micron fournie par Saint-Gobain Materials ;
- agents de mise en forme : agent liant de type dextrine et agent plastifiant de type Hydroxyéthylcellulose fournie par la société Aqualon ;
- poudre de borure de Zirconium ($ZrB_2$) pour réfractaires fournie par la société ESK et présentant une taille médiane inférieure à 75 microns ;

- poudre d'acide borique anhydre de taille inférieure à 200 microns fournie par UNIVAR ;
- poudre de $B_4C$ de taille médiane inférieure à 75 microns, fabriquée par la société DENKA.

Les formulations des charges de départ pour les différents exemples de référence et selon l'invention sont présentées dans les tableaux ci-après.

Une étape de pressage hydraulique uniaxial avec une contrainte de 700 kgf/cm$^2$ a été appliquée à la charge de départ dans le moule, afin de la compacter. La taille des blocs réalisée est 120*100*400 mm.

Tous les blocs ont ensuite été démoulés puis soumis à un séchage à 110°C sous air de manière à ce que l'humidité résiduelle diminue en deçà de 0,2%. Enfin, les blocs séchés ont subi une cuisson sous azote à 1470°C pendant au moins 10 heures.

Différentes analyses ont été réalisées sur les blocs ainsi réalisés dont les résultats sont présentés dans les tableaux suivants.

La porosité ouverte a été mesurée selon la norme ISO 5017.

Les teneurs en azote élémentaire (N) dans les produits frittés ont été mesurées au moyen d'analyseurs LECO (LECO TC 436DR ; LECO CS 300). Les valeurs sont fournies en pourcentages massiques

Le silicium résiduel est mesuré selon la méthode connue de l'homme du métier et référence sous ANSI B74-151992 (R2000).

La teneur massique en bore est mesurée par spectrométrie d'émission à plasma induit (ICP).

Les phases cristallisées, notamment les phases cristallisées azotées et le SiC$\alpha$, ont été mesurées par diffraction aux rayons X et quantifiées selon la méthode de Rietveld.

Des éprouvettes prélevées dans ces blocs ont par ailleurs été soumises à des tests de corrosion et d'oxydation : Dans ces tests, le produit de référence est « Réf. 1 » dans les tableaux 1 et 2, « Réf. 2 » dans le tableau 3, et « Réf. 3 » dans le tableau 4.

Le test "A" de corrosion dynamique, de type "doigt plongeant", a été effectué en plaçant des éprouvettes de dimensions 25 x 25 x 180 mm$^3$ en rotation à une vitesse linéaire de 2 cm par seconde, dans un liquide contenant du laitier de haut-fourneau et de la fonte liquide, à 1550°C, pendant 4 heures sous Argon. Le degré d'attaque est évalué en mesurant la perte d'épaisseur d'une éprouvette, en pourcentage de l'épaisseur initiale (25 mm). La mesure s'effectue au pied à coulisse au niveau de l'interface fonte-laitier. Plus la perte d'épaisseur est proche de zéro, et plus le produit est réputé stable, et meilleur en application. Les tableaux suivants fournissent le rapport entre ce pourcentage et le pourcentage obtenu, pour ce test, avec le produit de référence, ce rapport étant multiplié par 100 :

$$100 * \frac{\text{résultat au test A de l'exemple testé}}{\text{résultat au test A de du produit de référence}}$$

Le résultat au test A est donc 100 pour le produit de référence. Un résultat inférieur à 100 indique une meilleure résistance à la corrosion dynamique que le produit de référence.

Le test "B" d'oxydation a été effectué sur des éprouvettes de 25 x 25 x 70 mm$^3$, sous vapeur d'eau, à une température de 1100°C, pendant 72 heures, selon la norme ASTM C863. La stabilité à l'oxydation s'évalue, en mesurant la variation de longueur des barreaux, entre avant et après test d'oxydation, exprimée en pourcentage de la longueur initiale. Plus la variation de longueur est proche de zéro, et plus le produit est réputé stable, et meilleur en application. Les tableaux suivants fournissent le rapport entre ce pourcentage et le pourcentage obtenu, pour ce test, avec l'exemple de référence, ce rapport étant multiplié par 100. Le résultat au test B est donc 100 pour le produit de référence. Un résultat inférieur à 100 indique une meilleure résistance à l'oxydation que le produit de référence.

Le test de corrosion "C", dit "Betheleem Steel test", est un test d'application développé par l'entreprise sidérurgique américaine Betheleem Steel en vue de caractériser la stabilité de matériaux réfractaires soumis à une corrosion alcaline telle que celle rencontrée dans le garnissage de haut-fourneau. Ce test consiste à soumettre un jeu de barreaux réfractaires de 25*25*150 mm$^3$ à une corrosion de $K_2CO_3$ (carbonate de potassium) sous lit de coke, en ambiance confinée. A l'intérieur d'une gazette en acier réfractaire, les barreaux sont ensevelis sous une couche de $K_2CO_3$, puis cette couche est recouverte de coke présentant une taille médiane d'environ 1mm. La gazette est scellée par un couvercle réfractaire afin de maintenir une atmosphère réductrice pendant toute la phase de cuisson corrodante. La cuisson dure 6 heures à 925°C. A l'issue de la cuisson, les barreaux corrodés sont récupérés, lavés, séchés, puis on mesure leurs longueurs. Les variations de longueur sont exprimées en pourcentage des longueurs initiales, c'est-à-dire mesurées avant la cuisson. Plus la variation de longueur est proche de zéro, et plus le produit est réputé stable, et meilleur en application. Les tableaux suivants fournissent le rapport entre ce pourcentage et le pourcentage obtenu, pour ce test, avec l'exemple de référence, ce rapport étant multiplié par 100. Le résultat au test C est donc 100 pour le produit de référence. Un résultat inférieur à 100 indique une meilleure résistance à la corrosion alcaline que le produit de référence.

Le test « D » est un test de tenue au cyclage thermique sévère. Il consiste à placer 10 barreaux réfractaires de 25*25*150 mm$^3$ préalablement séchés à 110°C pendant une demi-heure dans un four à 1100°C pendant une demi-heure. Ces barreaux sont ensuite trempés dans un bac d'eau à température ambiante pendant environ 5 minutes. Les barreaux sont replacés directement dans le four sans séchage préalable de manière à recommencer un deuxième cycle de trempe à l'eau. L'opération se poursuit jusqu' à 30 cycles. Chaque barreau est ensuite observé et l'oeil permet d'identifier facilement l'apparition de fissures externes.

Les seuils de détection "SD" dépendent des appareils de mesure mis en oeuvre. Ces seuils sont les suivants :

- pour la diffraction X, méthode Rietveld : 0,5%,
- pour l'analyse chimique par fluorescence X : 0,05%,
- pour le LECO (Azote, carbone) : 0,05%,
- pour le bore et le silicium résiduel: <0,01%.

La matrice correspond à tout ce qui n'apparaît pas comme du corindon par une analyse de phase en DRX.

Les tableaux suivants résument les essais effectués et les résultats obtenus.

Tableau 1

| | Réf. 1 | Ex1 | Ex2 | Ex3 | Ex4 | Ex5 | Ex6 | Ex7 | Réf.2 | Ex8 | Ex9 | Ex10 |
|---|---|---|---|---|---|---|---|---|---|---|---|---|
| **Charge de base (en pourcentages massiques)** | | | | | | | | | | | | |
| Granulat : Mélange de grains de Corindon brun A1 | 77 | 77 | 77 | 77 | 77 | 77 | 77 | 77 | 77 | 77 | 77 | 77 |
| Poudre d'alumine calcinée | 12,7 | 12,7 | 12,7 | 12,7 | 12,7 | 12,7 | 12,7 | 12,7 | 12,7 | 12,7 | 12,7 | 12,7 |
| Silicium métal | 5 | 5 | 5 | 5 | 5 | 5 | 5 | 5 | 5 | 5 | 5 | 5 |
| Aluminium métal | 5,3 | 5,3 | 5,3 | 5,3 | 5,3 | 5,3 | 5,3 | 5,3 | 5,3 | 5,3 | 5,3 | 5,3 |
| **Ajouts à la charge de base (en pourcentages massiques sur la base de la charge de base)** | | | | | | | | | | | | |
| Agent liant | +0,5 | +0,5 | +0,5 | +0,5 | +0,5 | +0,5 | +0,5 | +0,5 | +0,5 | +0,5 | +0,5 | +0,5 |
| Agent plastifiant | +0,3 | +0,3 | +0,3 | +0,3 | +0,3 | +0,3 | +0,3 | +0,3 | +0,3 | +0,3 | +0,3 | +0,3 |
| Eau | +3,2 | +3,2 | +3,2 | +3,2 | +3,2 | +3,2 | +3,2 | +3,2 | +3,2 | +3,2 | +3,2 | +3,2 |
| Poudre de $B_4C$ (D50<75$\mu$m) | - | +0,2 | +0,5 | +1 | +1,5 | +2 | +3 | - | - | +1 | +2 | +3 |
| Poudre de $CaB_6$ ($D_{50}$<75$\mu$m) | - | - | - | - | - | - | - | +0,5 | - | - | - | - |
| Poudre de SiC ($D_{50}$ <1$\mu$m) | - | - | - | - | - | - | - | - | +5 | +5 | +3 | +1 |
| **Analyse chimique et cristallographique du produit fritté (matrice + granulat) en pourcentages massique** | | | | | | | | | | | | |
| Silicium résiduel | <0,1 | <0,1 | <0,1 | <0,1 | 0,15 | 0,3 | 0,2 | 0,15 | <0,1 | 0,12 | 0,13 | 0,13 |
| Azote (LECO) | 5,0 | 4,8 | 4,8 | 4,6 | 4,3 | 5,5 | 5,8 | 4,9 | 4,1 | 5,7 | 5,9 | 6,2 |
| Bore | <0,01 | 0,13 | 0,29 | 0,45 | 0,76 | 1,25 | 1,89 | 0,18 | <0,01 | 0,68 | 1,27 | 1,80 |
| $\beta$'SiAlON | 15 | 16 | 13 | 15 | 16 | 10 | 6 | 13 | 15 | 11 | 8 | 7 |
| $Si_3N_4$ ($Si_3N_4$-$\alpha$ et $Si_3N_4$-$\beta$) | <SD | <SD | <SD | <SD | <SD | <SD | <SD | <SD | <SD | <SD | <SD | <SD |
| $Si_2ON_2$ | <SD | <SD | <SD | <SD | <SD | <SD | <SD | <SD | <SD | <SD | <SD | <SD |
| Phase du type AlN15R | 2-6 | 5 | 4 | 5 | 6 | 6 | 4 | 6 | 4 | 2 | 2 | 2 |
| AlN | <SD | <SD | <SD | <SD | <SD | <SD | <SD | <SD | <SD | <SD | <SD | <SD |
| BN | <SD | <SD | <SD | <SD | <SD | <SD | <SD | <SD | <SD | <SD | <SD | <SD |
| SiC-$\alpha$ | <SD | <SD | <SD | <SD | <SD | <SD | <SD | <SD | 5 | 5 | 3,5 | 2,5 |
| Bore / Azote (dans le produit) | <0,01 | 2,7 | 6,0 | 9,8 | 17,7 | 22,7 | 32,6 | 3,7 | <0,01 | 11,9 | 21,5 | 29 |

(suite)

| Teneurs massiques en bore (calculées) exprimées en pourcentage | | | | | | | | | | | |
|---|---|---|---|---|---|---|---|---|---|---|---|
| sur la base de la matrice | <0,01 | 0,6 | 1,7 | 2,3 | 3,5 | 7,8 | 18,9 | 0,9 | <0,01 | 3,8 | 9,4 | 15,6 |
| sur la base de la partie cristallisée azotée | <0,01 | 0,6 | 1,7 | 2,3 | 3,5 | 7,8 | 18,9 | 0,9 | <0,01 | 3,6 | 12,7 | 20 |
| **Caractérisation physique du produit fritté** | | | | | | | | | | | |
| Porosité ouverte (%) | 14,5 | 14 | 13,5 | 13,5 | 12,9 | 12,9 | 12,0 | 16,0 | 14,0 | 13,1 | 12,3 | 12,2 |
| **Résultats aux tests** | | | | | | | | | | | |
| Test A | 100 | 104 | 113 | 102 | 95 | 92 | 90 | 100 | 77 | 77 | 76 | 80 |
| Test B (oxydation) | 100 | 108 | 102 | 69 | 17 | 6 | 38 | 60 | 125 | 17 | 10 | 19 |
| Test C | 100 | 56 | 39 | 22 | 9 | 18 | 20 | 90 | 6 | 7 | 26 | 31 |
| Somme des résultats aux tests A, B et C | 300 | 268 | 254 | 193 | 121 | 116 | 148 | 250 | 208 | 101 | 112 | 130 |

Tableau 2

| | Réf.1 | Ex11 | Ex12 | Ex13 | Ex14 | Ex15 | Ex16 |
|---|---|---|---|---|---|---|---|
| **Charge de base (en pourcentages massiques)** | | | | | | | |
| Granulat : Mélange de grains de Corindon brun A1 | 77 | 77 | 77 | 77 | 77 | 77 | 77 |
| Poudre d'alumine calcinée | 12,7 | 12,7 | 12,7 | 12,7 | 12,7 | 12,7 | 12,7 |
| Silicium métal | 5 | 5 | 5 | 5 | 5 | 5 | 5 |
| Aluminium métal | 5,3 | 5,3 | 5,3 | 5,3 | 5,3 | 5,3 | 5,3 |
| **Ajouts à la charge de base (en pourcentages massiques sur la base de la charge de base)** | | | | | | | |
| Agent liant | +0,5 | +0,5 | +0,5 | +0,5 | +0,5 | +0,5 | +0,5 |
| Agent plastifiant | +0,3 | +0,3 | +0,3 | +0,3 | +0,3 | +0,3 | +0,3 |
| Eau | +3,2 | +3,2 | +3,2 | +3,2 | +3,2 | +3,2 | +3,2 |
| Poudre de $ZrB_2$ ($D_{50}$ <75$\mu$m) | - | +0,5 | +1,0 | - | - | - | - |
| Poudre de $B_2O_3$ ($0_{50}$<75$\mu$m) | - | - | - | +1,3 | +2,5 | +3,8 | +5,0 |
| **Analyse chimique et cristallographique du produit fritté (matrice + granulat) en pourcentages massiques** | | | | | | | |
| Silicium résiduel | <0,1 | <0,1 | <0,1 | <0,1 | 0,13 | <0,1 | <0,1 |
| Azote (LECO) | 5,0 | 5,2 | 5,5 | 4,5 | 3,8 | 4,7 | 4,5 |
| Bore | <0,01 | 0,09 | 0,17 | 0,28 | 0,53 | 0,86 | 1,18 |
| $\beta$'SiAlON | 10-15 | 11 | 11 | 17 | 12 | 22 | 15 |
| $Si_3N_4$ ($Si_3N_4$-$\alpha$ et $Si_3N_4$-$\beta$) | <SD | <SD | <SD | <SD | <SD | <SD | <SD |
| $Si_2ON_2$ | <SD | <SD | <SD | <SD | <SD | <SD | <SD |
| Phase du type AIN15R | 2-6 | 4 | 4 | 3 | 2 | <SD | <SD |
| AIN | <SD | <SD | <SD | <SD | <SD | <SD | <SD |
| BN | <SD | <SD | <SD | <SD | <SD | <SD | <SD |
| ZrN | <SD | <SD | 1 | <SD | <SD | <SD | <SD |
| SiC-$\alpha$ | <SD | <SD | <SD | <SD | <SD | <SD | <SD |
| Bore / Azote (dans le produit) | <0,01 | 1,8 | 3,1 | 6,2 | 13,9 | 18,3 | 26,3 |
| **Teneurs massiques en bore (calculées) exprimées en pourcentage** | | | | | | | |
| sur la base de la matrice | <0,01 | 0,6 | 1,2 | 1,4 | 3,8 | 3,9 | 7,9 |
| sur la base de la partie cristallisée azotée | <0,01 | 0,6 | 1,1 | 1,4 | 3,8 | 3,9 | 7,9 |
| **Caractérisation physique du produit fritté** | | | | | | | |
| Porosité ouverte (%) | 14,5 | 13,9 | 13,6 | 15,2 | Fis | Fis | Fis |
| **Résultats aux tests** | | | | | | | |
| Test A | 100 | 113 | 105 | 128 | Fis | Fis | Fis |
| Test B (oxydation) | 100 | 259 | 599 | 181 | Fis | Fis | Fis |
| Test C | 100 | 100 | 311 | 100 | Fis | Fis | Fis |
| Somme des résultats aux tests A, B et C | 300 | 472 | 1015 | 409 | Fis | Fis | Fis |
| « Fis » : présence de fissures | | | | | | | |

Tableau 3

| | Réf. 2 | Ex17 | Ex18 | Ex19 | Ex20 | Ex21 | Ex22 |
|---|---|---|---|---|---|---|---|
| **Charge de base (en pourcentages massiques)** | | | | | | | |
| Granulat : Mélange de grains de Corindon brun A2 | 80 | 80 | 80 | 80 | 80 | 80 | 80 |
| Poudre d'alumine calcinée | 9,5 | 9,5 | 9,5 | 9,5 | 9,5 | 9,5 | 9,5 |
| Silicium métal | 8 | 8 | 8 | 8 | 8 | 8 | 8 |
| Aluminium métal | 2,5 | 2,5 | 2,5 | 2,5 | 2,5 | 2,5 | 2,5 |
| **Ajouts à la charge de base (en pourcentages massiques sur la base de la charge de base)** | | | | | | | |
| Agent liant | +0,5 | +0,5 | +0,5 | +0,5 | +0,5 | +0,5 | +0,5 |
| Agent plastifiant | +0,3 | +0,3 | +0,3 | +0,3 | +0,3 | +0,3 | +0,3 |
| Eau | +3,2 | +3,2 | +3,2 | +3,2 | +3,2 | +3,2 | +3,2 |
| Poudre de $B_4C$ (D50 <75$\mu$m) | - | +0,2 | +0,5 | +0,8 | +1,0 | +1,5 | +2,0 |
| **Analyse chimique et cristallographique du produit fritté (matrice + granulat) en pourcentages massiques** | | | | | | | |
| Silicium résiduel | <0,1 | <0,1 | <0,1 | <0,1 | 0,18 | 0,11 | 0,30 |
| Azote (LECO) | 6,0 | 5,6 | 6,0 | 5,8 | 6,1 | 6,3 | 7,3 |
| Bore | <0,05 | 0,12 | 0,30 | 0,47 | 0,62 | 0,94 | 1,24 |
| $\beta$'SiAlON | 16-22 | 18 | 20 | 19 | 18 | 20 | 19 |
| $Si_3N_4$ ($Si_3N_4$-$\alpha$ et $Si_3N_4$-$\beta$) | <SD | <SD | <SD | <SD | <SD | <SD | <SD |
| $Si_2ON_2$ | <SD | <SD | <SD | <SD | <SD | <SD | <SD |
| Phase du type AlN15R | <SD | <SD | <SD | <SD | <SD | <SD | <SD |
| AlN | <SD | <SD | <SD | <SD | <SD | <SD | <SD |
| BN | <SD | <SD | <SD | <SD | <SD | <SD | <SD |
| SiC-$\alpha$ | <SD | <SD | <SD | <SD | <SD | <SD | <SD |
| Bore / Azote (dans le produit) | <0,5 | 2,1 | 5,0 | 8,1 | 10,2 | 14,9 | 17,0 |
| **Teneurs massiques en bore (calculées) exprimées en pourcentage** | | | | | | | |
| sur la base de la matrice | <0,5 | 0,7 | 1,5 | 2,5 | 3,4 | 4,7 | 6,5 |
| sur la base de la partie cristallisée azotée | <0,5 | 0,7 | 1,5 | 2,5 | 3,4 | 4,7 | 6,5 |
| **Caractérisation physique du produit fritté** | | | | | | | |
| Porosité ouverte (%) | 14,5 | 14,2 | 13,7 | 14,0 | 14,2 | 13,8 | 13,6 |
| **Résultats aux tests** | | | | | | | |
| Test A | 115 | 109 | 121 | 111 | 114 | 100 | 89 |
| Test (oxydation) | 70 | 60 | 25 | 8 | 7 | 0 | 6 |
| Test C | 70 | 45 | 35 | 34 | 44 | 35 | 30 |
| Somme des résultats aux tests A, B et C | 255 | 214 | 181 | 153 | 165 | 135 | 125 |
| Test D (cyclage thermique) : présence de fissures après test | Non | Non | Non | Non | Non | Non | Non |

Tableau 4

| | Réf. 3 | Ex23 | Ex24 | Ex25 | Ex26 |
|---|---|---|---|---|---|
| **Charge de base (en pourcentages massiques)** | | | | | |
| Granulat : Mélange de grains de SiC | 80 | 80 | 80 | 80 | 80 |
| Poudre d'alumine calcinée | 9 | 9 | 9 | 9 | 9 |
| Silicium métal | 8 | 8 | 8 | 8 | 8 |
| Aluminium métal | 3 | 3 | 3 | 3 | 3 |
| **Ajouts à la charge de base (en pourcentages massiques sur la base de la charge de base)** | | | | | |
| Agent liant | +0,5 | +0,5 | +0,5 | +0,5 | +0,5 |
| Agent plastifiant | +0,3 | +0,3 | +0,3 | +0,3 | +0,3 |
| Eau | +5,4 | +5,4 | +5,4 | +5,4 | +5,4 |
| Poudre de B4C (D50 <75$\mu$m) | - | +0,5 | +1,0 | +1,5 | +2,0 |
| **Analyse chimique et cristallographique du produit fritté (matrice + granulat) en pourcentages massiques** | | | | | |
| Silicium résiduel | 0,29 | 0,22 | 0,22 | 0,21 | 0,24 |
| Azote (LECO) | 6,1 | 6,5 | 6,7 | 6,9 | 7,3 |
| Bore | <0,01 | 0,34 | 0,58 | 0,89 | 1,37 |
| $\beta$'SiAlON | 17 | 21 | 24 | 21 | 22 |
| SisN$_4$ (Si$_3$N$_4$-$\alpha$ et Si$_3$N$_4$-$\beta$) | <SD | <SD | <SD | <SD | <SD |
| Si$_2$ON$_2$ | <SD | <SD | <SD | <SD | <SD |
| Phase du type AlN15R | <SD | <SD | <SD | <SD | <SD |
| AlN | <SD | <SD | <SD | <SD | <SD |
| BN | <SD | <SD | <SD | <SD | <SD |
| SiC-$\alpha$ | 79 | 76 | 72 | 76 | 75 |
| Al$_2$O$_3$ | 4 | 3 | 4 | 3 | 3 |
| Bore / Azote (dans le produit) | <0,01 | 5,2 | 8,7 | 12,8 | 18,7 |
| **Teneurs massiques en bore (calculées) exprimées en pourcentage** | | | | | |
| sur la base de la matrice | <0,01 | 1,4 | 2,1 | 3,7 | 5,5 |
| sur la base de la partie cristallisée azotée | <0,01 | 1,6 | 2,4 | 4,2 | 6,2 |
| **Caractérisation physique du produit fritté** | | | | | |
| Porosité ouverte (%) | 15,6 | 15,6 | 15,6 | 15,2 | 14,7 |
| **Résultats aux tests** | | | | | |
| Test A | 165 | 185 | 167 | 150 | 164 |
| Test B (oxydation) | 43 | 5 | 10 | 7 | 2 |
| Test C | 5 | 0 | 5 | 15 | 10 |
| Somme des résultats aux tests A, B et C | 213 | 190 | 182 | 172 | 176 |

Le produit de référence 1, Réf. 1, constitue un produit non dopé au bore. De façon surprenante, l'addition de bore (produit selon les exemples 1 à 6) dans une gamme définie conduit à une amélioration des résultats.

Les meilleures performances en termes de résistance à la corrosion et à l'oxydation sont obtenues pour les exemples 8, 9, 4 et 5 avec des teneurs en bore variant de 0,68% à 1,27%, en pourcentage sur la base du produit.

Par ailleurs, l'addition de bore sous forme CaB6 (exemple 7) apporte, par comparaison avec l'exemple 1 selon l'invention (addition de bore sous forme B$_4$C), une amélioration en terme de résistance à l'oxydation mais conduit à une réduction de la résistance à la corrosion par les alcalins.

L'exemple 8 (5% de particules fines de SiC ajouté; 1% de B$_4$C) et l'exemple 9 (3% de particules fines de SiC ajouté; 2% de B$_4$C) présentent la meilleure performance au regard de la somme des résultats aux tests. En particulier, cette performance est très supérieure à celle de l'exemple de référence Réf. 2, qui ne comporte pas de bore et pour lequel des particules fines de SiC ont également été ajoutées. Cette performance est également supérieure à celle des exemples 5 et surtout 3, qui ne comportent pas de particules fines de SiC, mais pour lesquels un ajout de bore en quantité équivalente a été réalisé. Ces résultats traduisent un effet de synergie associé à la présence concomitante de particules fines de SiC et de bore dans la matrice d'un produit selon l'invention.

Par ailleurs, sans que cela puisse être expliqué par les inventeurs, une hétérogénéité de couleur rédhibitoire entre le coeur et la périphérie des blocs commence à être perceptible à partir d'une teneur en bore d'environ 3,0% sur la base du produit, soit environ 30% sur la base la matrice.

Les exemples 11 et 12 montrent que la forme ZrB$_2$ du bore dans la charge de départ conduit à une mauvaise résistance à l'oxydation (test B), voire à une mauvaise résistance aux alcalins (test C) pour l'exemple 12. Dans un mode de réalisation préféré de l'invention, la charge de départ comporte moins de 3,0%, moins de 2,0%, moins de 1,0%, moins de 0,5%, voire sensiblement pas de bore sous la forme ZrB2, en pourcentages massiques sur la base de la masse minérale sèche de la charge de départ.

Les exemples 14 à 16 montrent que la forme B$_2$O$_3$ du bore dans la charge de départ peut conduire à des fissures après séchage et avant cuisson. Ces fissures nuisent à la cohésion des pièces.

L'exemple 13 montre qu'une quantité limitée de B$_2$O$_3$ dans la charge de départ ne conduit pas à l'apparition de fissures mais conduit une mauvaise résistance à l'oxydation (test B).

Dans un mode de réalisation préféré de l'invention, la charge de départ comporte moins de 3,0%, moins de 2,0%, moins de 1,0%, moins de 0,5%, voire sensiblement pas de bore sous la forme B$_2$O$_3$, en pourcentages massiques sur la base de la matière minérale sèche de la charge de départ.

Les exemples 17 à 22 présentent, à taux de B$_4$C équivalent, une performance aux tests A B et C comparable à celle des exemples 1 à 5. Ces exemples présentent cependant une tenue au cyclage thermique améliorée.

Les exemples 23 à 26 montrent que l'invention fournit également de bons résultats avec un granulat de SiC (somme des tests A B et C), en particulier lorsque le bore est ajouté sous la forme B$_4$C dans la charge de départ.

Bien entendu, l'invention n'est pas limitée aux modes de réalisation décrits, fournis à titre illustratif et non limitatif.

En particulier, un produit fritté selon l'invention peut servir dans d'autres applications que les hauts-fourneaux, par exemple comme revêtement d'un four servant à la fusion de métaux, comme revêtement anti-abrasion ou dans un échangeur thermique.

**Revendications**

1. Produit réfractaire fritté comportant un granulat réfractaire lié par une matrice, le granulat étant composé pour plus de 70 % en masse, de grains en un matériau choisi parmi l'alumine, et notamment le corindon, blanc ou noir, ou l'alumine tabulaire, les spinelles, notamment les spinelles alumine-magnésie, la mullite, les précurseurs de mullite, l'oxyde de chrome, la zircone, le zircon, les nitrures, le nitrure de silicium Si$_3$N$_4$, les carbures, et notamment le carbure de silicium SiC, le carbone amorphe ou sous forme au moins partiellement cristallisée, et des mélanges de ces matières, et/ou est composé d'un mélange des grains mentionnés précédemment, la matrice représentant au moins 5 % et moins de 60 % de la masse du produit, le complément étant constitué par le granulat, ladite matrice comportant, dans sa masse, une phase cristallisée de formule Si$_x$Al$_y$O$_u$N$_v$, dans laquelle

   - x est supérieur ou égal à 0 et inférieur ou égal à 1 ;
   - y est supérieur à 0 et inférieur ou égal à 1 ;
   - u est supérieur ou égal à 0 et inférieur ou égal à 1 ;
   - v est supérieur à 0 et inférieur ou égal à 1 ;

   au moins un des indices stoechiométriques x, y, u et v étant égal à 1,
   la partie cristallisée azotée représentant au moins 50 % de la masse de la matrice, ledit produit comportant,

   - une teneur supérieure à 5% en ladite phase cristallisée de formule Si$_x$Al$_y$O$_u$N$_v$;
   - une teneur en bore autre que sous la forme d'une phase hexagonale de BN supérieure à 0,05% et inférieure à 3,0%, et
   - une teneur en phase hexagonale de BN inférieure à 10 %,
   - une teneur en phase Si$_3$N$_4$ inférieure à 5%,

en pourcentages en masse sur la base dudit produit.

2. Produit selon la revendication précédente, dans lequel

- x est supérieur à 0,05 ; et/ou
- y est supérieur à 0,1 ; et/ou
- u est supérieur à 0,1 ; et/ou
- v est supérieur à 0,1.

3. Produit selon l'une quelconque des revendications précédentes, comportant plus de 0,5% et moins de 2,0% de bore autre que sous la forme d'une phase hexagonale de BN, en pourcentage massique sur la base du produit.

4. Produit selon l'une quelconque des revendications précédentes, dans lequel la teneur en phase hexagonale de BN est inférieure à 2 % de la masse du produit.

5. Produit selon l'une quelconque des revendications précédentes, dans lequel la teneur en phases AlN et/ou d'un de ses polytypes, notamment 2H, 8H, 12H, 15R, 21R, et 27R, de formule $Si_{x'}Al_{y'}O_{u'}N_{v'}$, dans laquelle les indices stoechiométriques x', y', u' et v', normalisés, sont tels que $0 \leq x' \leq 0,37$ et $0,60 \leq y' \leq 1$ et $0 \leq u' \leq 0,71$ et $0,76 \leq v' \leq 1$, est supérieure à 1%, en pourcentage en masse sur la base dudit produit.

6. Produit selon l'une quelconque des revendications précédentes, dans lequel la teneur en phase de formule $Si_{x'}Al_{y'}O_{u'}N_{v'}$, dans laquelle les indices stoechiométriques, normalisés par rapport à l'indice le plus élevé, sont tels que $0,12 \leq x' \leq 0,33$ et $0,78 \leq y' \leq 1$ et $0,33 \leq u' \leq 0,55$ et $0,80 \leq v' \leq 1$, dite du type « AlN15R », est supérieure à 1,0%, en pourcentage massique sur la base du produit.

7. Produit selon l'une quelconque des revendications précédentes, comportant une phase de formule $Si_{x''}Al_{y''}O_{u''}N_{v''}$, dans laquelle les indices stoechiométriques, normalisés par rapport à l'indice le plus élevé, sont tels que $0,43 \leq x'' \leq 0,75$ et $0 \leq y'' \leq 1$ et $0 < u'' \leq 1$ et $0,9 \leq v'' \leq 1$, dite « β'SiAlON », la teneur en phase β'SiAlON dans le produit étant supérieure à 3%, en pourcentage massique sur la base du produit.

8. Produit selon l'une quelconque des revendications précédentes, comportant une phase de formule $Si_{x'}Al_{y'}O_{u'}N_{v'}$, dans laquelle les indices stoechiométriques sont tels que $0,12 \leq x' \leq 0,33$ et $0,78 \leq y' \leq 1$ et $0,33 \leq u' \leq 0,55$ et $0,80 \leq v' \leq 1$, dite du type « AlN15R », et une phase de formule $Si_{x''}Al_{y''}O_{u''}N_{v''}$, dans laquelle les indices stoechiométriques, normalisés par rapport à l'indice le plus élevé, sont tels que $0,43 \leq x'' \leq 0,75$ et $0 \leq y'' \leq 1$ et $0 < u'' \leq 1$ et $0,9 \leq v'' \leq 1$, dite « β'SiAlON », les indices stoechiométriques étant normalisés par rapport à l'indice le plus élevé, le rapport massique AlN15R/β'SiAlON étant compris entre 0,3 et 1,0.

9. Produit selon l'une quelconque des revendications précédentes, comportant moins de 3% de $Si_3N_4$ et/ou moins de 3% de phase AlN et/ou moins de 3% de phase $Si_2ON_2$ en pourcentage massique sur la base du produit, et/ou dans lequel la teneur en phase hexagonale de BN est sensiblement nulle.

10. Produit selon l'une quelconque des revendications précédentes, dans lequel la matrice comporte plus de 0,5% de particules de carbure de silicium, en pourcentage en masse sur la base du produit, l'ensemble desdites particules de carbure de silicium présentant une taille médiane comprise entre 0,1 et 100 microns.

11. Produit selon l'une quelconque des revendications précédentes, dans lequel l'alumine, le silicium métallique, et ladite phase cristallisée de formule $Si_xAl_yO_uN_v$, représentent ensemble plus de 80% de la masse de la matrice.

12. Produit selon l'une quelconque des revendications précédentes, dans lequel la matrice est obtenue par frittage réactif.

13. Produit selon l'une quelconque des revendications précédentes, dans lequel le granulat comporte plus de 70%, en masse, de corindon et/ou de carbure de silicium et/ou de spinelles alumine-magnésie.

14. Produit selon l'une quelconque des revendications précédentes, comportant une teneur en ladite phase cristallisée de formule $Si_xAl_yO_uN_v$ inférieure à 50%.

15. Dispositif comportant un produit selon l'une quelconque des revendications précédentes, et choisi parmi :

- un revêtement intérieur réfractaire d'un four ;
- un cubilot destiné à la refonte de métaux ou à la fusion de roches ;
- un revêtement d'un échangeur thermique ;
- un revêtement d'un incinérateur d'ordures ménagères ;
- un revêtement anti-abrasion ;
- une pièce céramique intervenant dans un dispositif de protection ou de régulation des jets de fonte ou d'acier ;
- une pièce céramique intervenant dans un dispositif de brassage, soit mécanique, soit par insufflation de gaz, dans le métal en fusion ;
- une brique de siège servant de logement et support à un dispositif d'insufflation de gaz ou à un dispositif d'insufflation de régulation d'un jet de métal,
- une dalle d'impact de poche ou de répartiteur ;
- un étalage, une ceinture d'une tuyère, un creuset, un ventre, une cuve d'un haut-fourneau ;
- une busette, un tampon ou un déversoir pour la fonderie de la fonte, de l'acier et des aciers spéciaux ;
- un support pour la cuisson de produits céramiques.

16. Procédé de fabrication d'un produit fritté selon l'une quelconque des revendications 1 à 13, comportant les étapes successives suivantes :

   a) préparation d'une charge de départ comportant

   - un granulat réfractaire,
   - des précurseurs de phase cristallisée de formule $Si_xAl_yO_uN_v$, et
   - un composé organométallique choisi parmi $B_4C$, $CaB_6$, $TiB_2$, $H_3BO_3$ et leurs mélanges,

   b) versement de ladite charge de départ dans un moule ;
   c) mise en forme de la charge de départ à l'intérieur du moule, par compaction, de manière à former une préforme ;
   d) démoulage de ladite préforme ;
   e) optionnellement, séchage de la préforme, de préférence de manière jusqu'à ce que l'humidité résiduelle soit comprise entre 0 et 0,5 % ;
   f) cuisson de la préforme sous atmosphère réductrice d'azote ou sous atmosphère non oxydante si de l'azote est apporté par la charge de départ, de préférence à une température comprise entre 1300 et 1600°C, de manière à obtenir un bloc,

17. Procédé selon la revendication précédente, dans lequel la charge de départ ne comporte pas d'autre composé de bore que ledit composé organométallique.


**Patentansprüche**

1. Feuerfestes gesintertes Produkt enthaltend ein feuerfestes, durch eine Matrix gebundenes Granulat, wobei das Granulat zusammengesetzt ist zu mehr als 70 % in Masse, aus Körnern aus einem Material ausgewählt aus Aluminiumoxid, und insbesondere weißem oder schwarzem Korund oder Tabular-Aluminiumoxid, Spinellen, insbesondere Aluminiumoxid-Magnesiumoxid-Spinellen, Mullit, Mullit-Vorläufern, Chromoxid, Zirkoniumoxid, Zirkon, Nitriden, Siliziumnitrid $Si_3N_4$, Carbiden, und insbesondere Siliziumcarbid SiC, Kohlenstoff, amorph oder in mindestens teilweise kristallisierter Form, und Mischungen dieser Materien, und/oder zusammengesetzt ist aus einer Mischung der zuvor genannten Körner, wobei die Matrix mindestens 5 % und weniger als 60 % der Masse des Produktes darstellt, wobei das Komplement gebildet ist durch das Granulat, die besagte Matrix enthaltend, in ihrer Masse, eine kristallisierte Phase der Formel $Si_xAl_yO_uN_v$, wobei

   - x größer als oder gleich 0 ist und geringer als oder gleich 1 ;
   - y größer als 0 ist und geringer als oder gleich 1 ;
   - u größer als oder gleich 0 ist und geringer als oder gleich 1 ;
   - v größer als 0 ist und geringer als oder gleich 1 ;

wobei mindestens eines der stöchiometrischen Indizes x, y, u und v gleich 1 ist,
wobei der kristallisierte, stickstoffhaltige Teil mindestens 50 % der Masse der Matrix darstellt, das besagte Produkt enthaltend,

- einen Gehalt von größer als 5 % an besagter kristallisierter Phase der Formel $Si_xAl_yO_uN_v$;
- einen Gehalt an Bor außer in Form einer hexagonalen Phase von BN von größer als 0,05 % und geringer als 3,0 %, und
- einen Gehalt an hexagonaler Phase von BN von geringer als 10 %,
- einen Gehalt an $Si_3N_4$-Phase von geringer als 5 %,

in Prozentangaben in Masse auf Basis des besagten Produktes.

2. Produkt nach dem vorhergehenden Anspruch, wobei

- x größer ist als 0,05; und/oder
- y größer ist als 0,1; und/oder
- u größer ist als 0,1; und/oder
- v größer ist als 0,1.

3. Produkt nach irgend einem der vorhergehenden Ansprüche, enthaltend mehr als 0,5 % und weniger als 2,0 % an Bor außer in Form einer hexagonalen Phase von BN, in Massen-Prozentangabe auf Basis des Produktes.

4. Produkt nach irgend einem der vorhergehenden Ansprüche, wobei der Gehalt an hexagonaler Phase an BN geringer als 2 % der Masse des Produktes ist.

5. Produkt nach irgend einem der vorhergehenden Ansprüche, wobei der Gehalt an AlN-Phasen und/oder einem ihrer Polytypen, insbesondere 2H, 8H, 12H, 15R, 21R, und 27R, der Formel $Si_{x'}Al_{y'}O_{u'}N_{v'}$, wobei die stöchiometrischen Indizes x', y', u' und v', normalisiert, so sind, dass $0 \leq x' \leq 0,37$ und $0,60 \leq y' \leq 1$ und $0 \leq u' \leq 0,71$ und $0,76 \leq v' \leq 1$, größer ist als 1 %, in Prozentangabe in Masse auf Basis des besagten Produktes.

6. Produkt nach irgend einem der vorhergehenden Ansprüche, wobei der Gehalt an einer Phase der Formel $Si_{x'}Al_{y'}O_{u'}N_{v'}$, wobei die stöchiometrischen Indizes, welche normalisiert sind in Bezug auf den höchsten Index, so sind, dass $0,12 \leq x' \leq 0,33$ und $0,78 \leq y' \leq 1$ und $0,33 \leq u' \leq 0,55$ und $0,80 \leq v' \leq 1$, genannt vom Typ "AlN15R", größer ist als 1,0 %, in Massen-Prozentangabe auf Basis des Produktes.

7. Produkt nach irgend einem der vorhergehenden Ansprüche, enthaltend eine Phase der Formel $Si_{x''}Al_{y''}O_{u''}N_{v''}$, wobei die stöchiometrischen Indizes, welche normalisiert sind in Bezug auf den höchsten Index, so sind, dass $0,43 \leq x'' \leq 0,75$ und $0 \leq y'' \leq 1$ und $0 < u'' \leq 1$ und $0,9 \leq v'' \leq 1$, genannt "β'SiAlON", wobei der Gehalt an β'SiAlON-Phase in dem Produkt größer ist als 3 %, in Massen-Prozentangabe auf Basis des Produktes.

8. Produkt nach irgend einem der vorhergehenden Ansprüche, enthaltend eine Phase der Formel $Si_{x'}Al_{y'}O_{u'}N_{v'}$, wobei die stöchiometrischen Indizes so sind, dass $0,12 \leq x' \leq 0,33$ und $0,78 \leq y' \leq 1$ und $0,33 \leq u' \leq 0,55$ und $0,80 \leq v' \leq 1$, genannt vom Typ "AlN15R", und eine Phase der Formel $Si_{x''}Al_{y''}O_{u''}N_{v''}$, wobei die stöchiometrischen Indizes, welche normalisiert sind in Bezug auf den höchsten Index, so sind, dass $0,43 \leq x'' \leq 0,75$ und $0 \leq y'' \leq 1$ und $0 < u'' \leq 1$ und $0,9 \leq v'' \leq 1$, genannt "β'SiAlON", wobei die stöchiometrischen Indizes normalisiert sind in Bezug auf den höchsten Index, wobei das Massen-Verhältnis AlN15R / β'SiAlON zwischen 0,3 und 1,0 liegt.

9. Produkt nach irgend einem der vorhergehenden Ansprüche, enthaltend weniger als 3 % an $Si_3N_4$ und/oder weniger als 3 % an AlN-Phase und/oder weniger als 3 % an $Si_2ON_2$-Phase in Massen-Prozentangabe auf Basis des Produktes, und/oder wobei der Gehalt an hexagonaler Phase von BN im Wesentlichen Null ist.

10. Produkt nach irgend einem der vorhergehenden Ansprüche, wobei die Matrix mehr als 0,5 % an Siliziumcarbid-Teilchen enthält, in Prozentangabe in Masse auf Basis des Produktes, wobei die Gesamtheit der besagten Siliziumcarbid-Teilchen eine Median-Größe zwischen 0,1 und 100 Mikron aufweist.

11. Produkt nach irgend einem der vorhergehenden Ansprüche, wobei das Aluminiumoxid, das metallische Silizium, und die besagte kristallisierte Phase der Formel $Si_xAl_yO_uN_v$ zusammen mehr als 80 % der Masse der Matrix darstellen.

12. Produkt nach irgend einem der vorhergehenden Ansprüche, wobei die Matrix durch Reaktionssintern erhalten ist.

13. Produkt nach irgend einem der vorhergehenden Ansprüche, wobei das Granulat mehr als 70 %, in Masse, an Korund und/oder an Siliziumkarbid und/oder Aluminiumoxid-Magnesiumoxid-Spinelle enthält.

14. Produkt nach irgend einem der vorhergehenden Ansprüche, enthaltend einen Gehalt an der besagten kristallisierten Phase der Formel $Si_xAl_yO_uN_v$ von geringer als 50 %.

15. Vorrichtung enthaltend ein Produkt nach irgend einem der vorhergehenden Ansprüche, und ausgewählt aus:

- Einer feuerfesten Innen-Verkleidung eines Ofens;
- Einem Kupolofen bestimmt für das Einschmelzen von Metallen oder für das Schmelzen von Gesteinen;
- Einer Verkleidung eines Wärmetauschers;
- Einer Verkleidung einer Müllverbrennungsanlage;
- Einer Anti-Abriebs-Verkleidung;
- Einem keramischen Stück welches in einer Vorrichtung zum Schutz oder zur Regulierung von Güssen aus Gusseisen oder aus Stahl beteiligt ist;
- Einem keramischen Stück welches in einer Vorrichtung zum Rühren beteiligt ist, sei es mechanisch, sei es durch Einblasen von Gas, in dem Metall in Schmelze;
- Einem Lochstein, der als Gehäuse und Träger für eine Vorrichtung zum Einblasen von Gas oder für eine Vorrichtung zum Einblasen zur Regulierung von Güssen aus Metall dient,
- Einer Pfannen- oder Verteiler-Prallplatte;
- Einem Rast, einer Blasform-Umfassung, einem Gestell, einem Kohlensack, einem Schacht eines Hochofens;
- Einem Gießrohr, einem Puffer, oder einem Überlauf für die Gießerei von Gusseisen, Stahl und Edelstähle;
- Einem Träger für das Brennen keramischer Produkte.

16. Verfahren zur Herstellung eines gesinterten Produktes nach irgend einem der Ansprüche 1 bis 13, enthaltend die folgenden aufeinander folgenden Schritte:

a) Herstellung einer Ausgangscharge enthaltend

- Ein feuerfestes Granulat,
- Vorläufer einer kristallisierten Phase der Formel $Si_xAl_yO_uN_v$, und
- Eine organometallische Verbindung ausgewählt aus $B_4C$, $CaB_6$, $TiB_2$, $H_3BO_3$ und deren Mischungen,

b) Eingießen der besagten Ausgangscharge in eine Form;
c) In-Form-Bringen der Ausgangscharge im Inneren der Form, durch Verdichtung, um so eine Vorform zu bilden;
d) Aus-der-Form-Nehmen der besagten Vorform;
e) Optional, Trocknen der Vorform, vorzugsweise derart bis die Restfeuchtigkeit zwischen 0 und 0,5 % ist;
f) Brennen der Vorform in reduzierender Stickstoff-Atmosphäre oder in nicht-oxidierender Atmosphäre wenn Stickstoff durch die Ausgangscharge eingebracht wird, vorzugsweise bei einer Temperatur zwischen 1300 und 1600 °C, um einen Block zu erhalten,

17. Verfahren nach dem vorhergehenden Anspruch, wobei die Ausgangscharge keine andere Borverbindung enthält als die besagte organometallische Verbindung.

**Claims**

1. A sintered refractory product comprising a refractory granulate bonded with a matrix, the matrix being composed for more than 70% by weight, by grains made of a material chosen among alumina, in particular corundum, white or black, or tubular alumina, spinels, notably alumina-magnesia spinels, mullite, mullite precursors, chromium oxide, zirconia, zircon, nitrides, silicon nitride $Si_3N_4$, carbides, notably silicon carbide SiC, amorphous carbon or carbon in an at least partially crystalline form, and mixtures of said materials, and/or it is composed of a mixture of the grains mentioned above, the matrix representing at least 5% and less than 60% of the mass of the product, the complement being constituted by the granulate, said matrix comprising, in its bulk, a SiAlON crystalline phase with formula $Si_xAl_yO_uN_v$, in which

• x is greater than or equal to 0 and less than or equal to 1;
• y is greater than 0 and less than or equal to 1;
• u is greater than or equal to 0 and less than or equal to 1; and

- v is greater than 0 and less than or equal to 1;

at least one of the stoichiometric indices x, y, u, and v being equal to 1, said product comprising;
- a quantity of more than 5% of said crystalline phase with formula $Si_xAl_yO_uN_v$;
- a quantity of boron other than in the form of hexagonal phase BN of more than 0.05% and less than 3.0%; and
- a quantity of hexagonal phase BN of less than 10%; and
- a quantity of $Si_3N_4$ phase of less than 5%;

as percentages by weight based on said product.

2. A product according to the preceding claim, wherein:

- x is greater than 0.05; and/or
- y is greater than 0.1; and/or
- u is greater than 0.1; and/or
- v is greater than 0.1.

3. A product according to either preceding claim, comprising more than 0.5% and less than 2.0% of boron other than in the form of hexagonal phase BN, as a percentage by weight based on the product.

4. A product according to any preceding claim, wherein the quantity of hexagonal phase BN is less than 2% of the mass of the product.

5. A product according to any preceding claim, wherein the quantity of AIN phases and/or of one of its polytypes, in particular 2H, 8H, 12H, 15R, 21R, and 27R, with formula $Si_{x'}Al_{y'}O_{u'}N_{v'}$, in which the stoichiometric indices x', y', u' and v', normalized, are such that $0 \leq x' \leq 0.37$ and $0.60 \leq y' \leq 1$ and $0 \leq u' \leq 0.71$ and $0.76 \leq v' \leq 1$, is more than 1%, as a percentage by weight based on said product.

6. A product according to any preceding claim, wherein the quantity of the phase with formula $Si_{x'}Al_{y'}O_{u'}N_{v'}$, in which the stoichiometric indices, normalized relative to the highest index, are such that $0.12 \leq x' \leq 0.33$ and $0.78 \leq y' \leq 1$ and $0.33 \leq u' \leq 0.55$ and $0.80 \leq v' \leq 1$, denoted type "AIN15R", is more than 1.0%, as a percentage by weight based on the product.

7. A product according to any preceding claim, comprising a phase with formula $Si_{x''}Al_{y''}O_{u''}N_{v''}$, in which the stoichiometric indices, normalized relative to the highest index, are such that $0.43 \leq x'' \leq 0.75$ and $0 \leq y'' \leq 1$ and $0 < u'' \leq 1$ and $0.9 \leq v'' \leq 1$, denoted "β'SiAlON", the quantity of β'SiAlON phase in the product being more than 3%, as a percentage by weight based on the product.

8. A product according to any preceding claim, comprising a phase with formula $Si_{x'}Al_{y'}O_{u'}N_{v'}$, in which the stoichiometric indices are such that $0.12 \leq x' \leq 0.33$ and $0.78 \leq y' \leq 1$ and $0.33 \leq u' \leq 0.55$ and $0.80 \leq v' \leq 1$, denoted type "AIN15R", and a phase with formula $Si_{x''}Al_{y''}O_{u''}N_{v''}$, in which the stoichiometric indices, normalized relative to the highest index, are such that $0.43 \leq x'' \leq 0.75$ and $0 \leq y'' \leq 1$ and $0 < u'' \leq 1$ and $0.9 \leq v'' \leq 1$, denoted "β'SiAlON", the stoichiometric indices being normalized relative to the highest index, the weight ratio AIN15R /β'SiAlON being in the range 0.3 to 1.0.

9. A product according to any preceding claim, comprising less than 3% of $Si_3N_4$ and/or less than 3% of the AIN phase and/or less than 3% of the $Si_2ON_2$ phase as a percentage by weight based on the product, and/or wherein the quantity of hexagonal phase BN is substantially zero.

10. A product according to any preceding claim, wherein the matrix comprises more than 0.5% of silicon carbide particles, as a percentage by weight based on the product, the set of said particles of silicon carbide having a median size in the range 0.1 to 100 micrometers.

11. A product according to any preceding claim, wherein the alumina, the metallic silicon and said crystalline SiAlON phase with formula $Si_xAl_yO_uN_v$ together represent more than 80% of the mass of the matrix.

12. A product according to any preceding claim, wherein the matrix is obtained by reactive sintering.

13. A product according to any preceding claim, wherein the granulate comprises more than 70% by weight of corundum and/or silicon carbide and/or alumina-magnesia spinels.

**14.** A product according to any preceding claim, comprising a content of said crystalline phase with formula $Si_xAl_yO_uN_v$ of less than 50%.

**15.** A device comprising a product according to any preceding claim, and selected from:

- an inner refractory lining for a furnace;
- a cupola furnace for remelting metals or fusing rock;
- a heat exchanger lining;
- a lining for a household waste incinerator;
- an anti-abrasion lining;
- a ceramic part used in a device for protecting or regulating jets of molten iron or steel;
- a ceramic part used in puddling equipment, either mechanical or by blowing gas into the molten metal;
- a nozzle seating block to house and support gas blowing equipment or blowing equipment for regulating a jet of metal;
- a ladle or distributor impact flagstone;
- boshes, a tuyere girdle, a crucible, bosh parallels or a blast furnace stack;
- a pouring channel, a stopper or a spout for cast iron, steel or special steel melting house;
- a support for firing ceramic products.

**16.** A method of producing a sintered product according to any one of claims 1 to 13, said method comprising the following steps in succession:

a) preparing a starting charge comprising

- a refractory granulate;
- SiAlON precursors; and
- an organometallic compound selected from $B_4C$, $CaB_6$, $TiB_2$, $H_3BO_3$, and mixtures thereof;

b) casting said starting charge into a mold;
c) shaping the starting charge inside the mold, by compaction, in order to form a preform;
d) unmolding said preform;
e) optionally drying said preform, preferably until the residual moisture content is in the range 0 to 0.5%;
f) firing the preform in a reducing nitrogen atmosphere or in a non-oxidizing atmosphere if nitrogen is added by the starting charge, preferably at a temperature in the range 1300°C to 1600°C, in order to obtain a block.

**17.** A method according to the preceding claim, wherein the starting charge does not comprise any other boron compound apart from said organometallic compound.

Fig.1

Fig.2

Fig.3

Fig.4

Fig.5

Fig.6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009083078 A
- US 4533646 A
- US 3991166 A
- US 4243621 A
- EP 0153000 A
- FR 0412627
- EP 0482984 A

- FR 2892720
- WO 9615999 A
- US 5521129 A
- EP 0242849 A
- JP 07126072 B
- US 4871698 A
- JP 07069744 B